# EUROPÄISCHE PATENTSCHRIFT

(11) **EP 3 149 355 B1**
(45) Veröffentlichungstag und Bekanntmachung des Hinweises auf die Patenterteilung: **17.10.2018**
(21) Anmeldenummer: 15725066.3
(22) Anmeldetag: 02.06.2015
(51) Int. Cl.: F16F 9/06, F16F 9/512

(54) **VENTIL FÜR HYDRAULIKDÄMPFER**
VALVE FOR HYDRAULIC DAMPER
SOUPAPE POUR AMORTISSEUR HYDRAULIQUE

(30) Priorität: 02.06.2014 DE 102014107708
(43) Veröffentlichungstag der Anmeldung: 05.04.2017
(73) Patentinhaber: LISEGA SE, 27404 Zeven (DE)
(72) Erfinder: BERNERT, Jörg, 27404 Zeven (DE); LANGE, Heinz-Wilhelm, 27404 Zeven (DE); SCHMIDT, Gunnar, 27404 Elsdorf/Frankenbostel (DE)
(74) Vertreter: Lippert Stachow Patentanwälte Rechtsanwälte
(86) Internationale Anmeldenummer: PCT/EP2015/062256
(87) Internationale Veröffentlichungsnummer: WO 2015/185550

(56) Entgegenhaltungen:
- EP-A1- 1 686 284
- WO-A1-99/02888
- JP-A- 2010 209 959

## Beschreibung

Die Erfindung betrifft ein Ventil zum Gewährleisten eines Druckausgleichs zwischen Teilkammern eines Hydraulikdämpfers gemäß dem Oberbegriff von Anspruch 1. Ferner betrifft die Erfindung einen Hydraulikdämpfer.

Gattungsgemäße Hydraulikdämpfer werden zum Dämpfen von Krafteinwirkungen, wie beispielsweise Kraftstöße, auf Bauelemente von Bauwerken eingesetzt. Beispielsweise werden gattungsgemäße Hydraulikdämpfer zum Dämpfen von Schwingungen in Bauwerken, wie beispielsweise Brücken oder Hochhäuser, eingesetzt, die bei Erdbeben auftreten können. Beispielsweise werden die Hydraulikdämpfer hierzu in Seildämpfern eingesetzt. Gattungsgemäße Hydraulikdämpfer sind dazu ausgebildet, die Gefahr zu verringern, dass tragende Elemente von Bauwerken durch plötzliche Kraftstöße voneinander getrennt werden. Entsprechend sind gattungsgemäße Hydraulikdämpfer dazu ausgebildet, solche Kraftstöße zu dämpfen. Wegen der ganz erheblichen Kräfte, die bei dem Einsatzgebiet solcher Hydraulikdämpfer auftreten, müssen solche Hydraulikdämpfer besonders robust ausgebildet sein und extrem hohe Kräfte dämpfen können. Darüber hinaus werden an solche Hydraulikdämpfer besonders hohe Anforderungen in Bezug auf die Haltbarkeit und Zuverlässigkeit gestellt, was bei der Konstruktion entsprechender Hydraulikdämpfer zu berücksichtigen ist.

Üblicherweise weisen gattungsgemäße Hydraulikdämpfer eine Arbeitskammer auf, in der ein Kolben verschiebbar angeordnet ist, der die Arbeitskammer in zwei Teilkammern, nämlich eine erste und eine zweite Teilkammer, unterteilt. Dabei ist in dem Kolben eine Fluidführung vorgesehen, die einen geringen Querschnitt aufweist und die beiden Teilkammern miteinander fluidführend verbindet. Der Hydraulikdämpfer wird so zwischen zwei gegeneinander abzudämpfende Bauelemente montiert, dass der Kolben mit einem ersten der Bauelemente verbunden wird und das Gehäuse, in dem die Arbeitskammer angeordnet ist, mit dem zweiten der Bauelemente verbunden wird. In der Arbeitskammer ist eine hydraulische Flüssigkeit vorgesehen. Bei einer Kraftbelastung der beiden Bauelemente gegeneinander wird der Kolben in der Arbeitskammer verschoben, wobei sich das Volumenverhältnis der beiden Teilkammern zueinander verändert. Durch den kleinen Querschnitt der Fluidführung in dem Kolben ist gewährleistet, dass ein Verschieben der Bauelemente nur gedämpft erfolgen kann.

Es hat sich herausgestellt, dass es besonders vorteilhaft ist, in der Fluidführung ein Ventil vorzusehen, das einen Fluidstrom zwischen den Teilkammern nur dann ermöglicht, wenn eine Kraft, die zwischen den Bauelementen wirkt, bzw. eine Relativgeschwindigkeit zwischen den Bauelementen einen Mindestbetrag übersteigt. Denn dadurch setzt eine Verschiebung der Bauelemente nur dann ein, wenn eine entsprechend hohe Kraft vorliegt, so dass der Hydraulikdämpfer bei dem Einwirken einer besonders hohen Kraft eine gedämpfte Verschiebung der Bauelemente zueinander zulässt. Herkömmlicherweise sind hierzu Ventile vorgesehen, die zwei Ventilelemente aufweisen, von denen eines als Aufnahmeelement und eines als Verschiebeelement ausgebildet ist. Das Aufnahmeelement ist starr in dem Kolben vorgesehen und weist zumindest einen Abschnitt der Fluidführung auf. Das Verschiebeelement ist so an einem Ende des Aufnahmeelements angeordnet, dass es in der Ruhelage die Fluidführung verschließt. Üblicherweise ist das Verschiebeelement über eine Federeinrichtung mit einer Federkraft beaufschlagt, die das Verschiebeelement in der Ruhelage gegen das Aufnahmeelement bzw. die Fluidführung presst. Sobald der Druckunterschied zwischen den Teilkammern einen Mindestbetrag eines Drucks übersteigt, d. h. sobald auf den Hydraulikdämpfer ein Mindestbetrag einer Kraft einwirkt, wird das Verschiebeelement aus der Ruhelage ausgelenkt. Dabei erfährt das Verschiebeelement durch den Druckunterschied eine solche Verschiebekraft, dass es entgegen der durch die Federeinrichtung erzeugten Federkraft von dem Aufnahmeelement weggepresst wird, so dass ein Fluidstrom durch die Fluidführung zwischen den beiden Teilkammern fließen kann, nämlich von einer ersten Teilkammer, in der ein hoher Druck vorliegt, in eine zweite Teilkammer, in der ein niedrigerer Druck vorliegt.

EP 1 686 284 A1 offenbart einen Stoßdämpfer, der ein Ventil mit den Merkmalen des Oberbegriffs des Anspruchs 1 aufweist. Herkömmliche Hydraulikdämpfer weisen jedoch den Nachteil auf, dass die Ventile nach dem Erreichen des Mindestbetrags der Kraft zwischen den Bauelementen plötzlich öffnen, so dass es zu einem ruckartigen Verschieben der Bauelemente kommen kann. Darüber hinaus sind herkömmliche Hydraulikdämpfer nur zum Dämpfen von Kräften in einem begrenzten Kraftintervall geeignet, die zwischen Bauelementen wirken, zwischen die der Hydraulikdämpfer montiert ist. Denn bei dem Anliegen einer zu kleinen Kraft an dem Hydraulikdämpfer öffnen die Ventile in dem Kolben nicht, so dass sich der Kolben nicht oder nur kaum in der Arbeitskammer bewegen kann, so dass keine Dämpfung erfolgt. Liegt eine sehr große Kraft an dem Hydraulikdämpfer an, so können herkömmliche Hydraulikdämpfer keine ausreichende Verschiebung der Bautelemente zueinander einräumen, da sie der großen Kraft nicht schnell genug nachgeben können, so dass es zu Beschädigungen an dem Bauwerk kommen kann. Dieser herkömmlichen Hydraulikdämpfern inhärenten Problematik liegt
die Tatsache zugrunde, dass bei der Gestaltung der Hydraulikdämpfer stets ein Kompromiss eingegangen werden muss zwischen dem Mindestbetrag der Kraft, ab der der Hydraulikdämpfer eine Dämpfung gewährleisten kann, und der Nachgiebigkeit des Hydraulikdämpfers bei dem Anliegen einer sehr großen Kraft.

Der Erfindung liegt die Aufgabe zugrunde, ein Ventil zum Gewährleisten eines Druckausgleichs zwischen Teilkammern eines Hydraulikdämpfers bereitzustellen, das die obengenannten Probleme und Nachteile herkömmlicher Ventile zumindest teilweise behebt. Ferner liegt der Erfindung die Aufgabe zugrunde, einen Hydraulikdämpfer bereitzustellen, der die Nachteile herkömmlicher Hydraulikdämpfer zumindest teilweise behebt.

Als eine Lösung der genannten Aufgabe schlägt die Erfindung ein Ventil mit den Merkmalen gemäß Anspruch 1 vor. Das Ventil ist zum Gewährleisten eines Druckausgleichs zwischen Teilkammern eines Hydraulikdämpfers ausgebildet. Damit ist das Ventil zum wechselweisen Zulassen und Unterbrechen eines Fluidstroms zwischen den Teilkammern des Hydraulikdämpfers ausgebildet. Das Ventil weist eine erste Seite zum Verbinden mit einer ersten Teilkammer und eine zweite Seite zum Verbinden mit einer zweiten Teilkammer des Hydraulikdämpfers auf. Dabei ist das Ventil in seiner Ruhelage zum Sperren eines Fluidstroms zwischen den beiden Seiten ausgebildet, wobei das Ventil bei einer Auslenkung aus seiner Ruhelage einen Durchlasskanal mit einem Durchlassquerschnitt zum Zulassen des Fluidstroms aufweist. Das Fluid kann somit über den Durchlassquerschnitt durch den Durchlasskanal fließen, wenn das Ventil aus seiner Ruhelage ausgelenkt ist. Das erfindungsgemäße Ventil weist zwei Ventilelemente auf, die zueinander geführt sind und entlang einer Verschieberichtung zueinander verschiebbar sind. Insbesondere können die beiden Ventilelemente linear zueinander verschiebbar sein, was sich konstruktivbesonders einfach realisieren lässt. Es sind jedoch auch beispielsweise gekrümmte Verschiebewege möglich. Die Ventilelemente können entlang der Verschieberichtung über einen Verschiebeweg hinweg zueinander verschiebbar sein. Von den beiden Ventilelementen ist eines als Verschiebeelement und das andere als Aufnahmelement ausgebildet. Das Verschiebeelement kann relativ zu dem Aufnahmeelement entlang des Verschiebewegs verschiebbar sein. Das Verschiebeelement und/oder das Aufnahmeelement können einstückig ausgebildet sein.

Das Verschiebeelement ist an seiner Belastungsseite durch ein Fluid von der ersten Seite aus mit Druck beaufschlagbar unter Erzeugung einer effektiven Verschiebekraft auf das Verschiebeelement in der Verschieberichtung, wobei das Verschiebeelement mit einer Federeinrichtung verbunden ist, die auf das Verschiebeelement eine Federkraft ausübt unter Erzeugung einer Rückstellkraft, die der effektiven Verschiebekraft entgegengesetzt ist. Das Ventil ist somit so ausgebildet, dass es von seiner ersten Seite aus durch ein Fluid so mit Druck beaufschlagbar ist, dass das Fluid an die Belastungsseite des Verschiebeelements gelangt und eine effektive Verschiebekraft auf das Verschiebeelement ausüben kann. Ferner kann das Verschiebeelement so in dem Ventil angeordnet sein, dass es an seiner Gegenseite, die der Belastungsseite gegenüberliegen kann, von der zweiten Seite aus durch ein Fluid mit Druck beaufschlagbar ist. Beispielsweise kann die Belastungsseite zur ersten Seite des Ventils hinweisen und die Gegenseite zur zweiten Seite des Ventils.

Die effektive Verschiebekraft ist selbstverständlich von der Fläche abhängig, über die das Fluid von der ersten Seite aus das Verschiebeelement mit Druck in die Verschieberichtung beaufschlagen kann. Die Verschieberichtung verläuft dabei insbesondere mit einer Komponente in einer Richtung, die die erste Seite mit der zweiten Seite verbindet. Somit kann ein Druckgefälle, das zwischen einem Druck in der ersten Teilkammer an der ersten Seite des Ventils und einem Druck in der zweiten Teilkammer an der zweiten Seite des Ventils besteht, eine Verschiebung des Verschiebeelements zumindest mit einer Komponente von der ersten Teilkammer zur zweiten Teilkammer und damit von der ersten Seite zur zweiten Seite des Ventils hervorrufen. Die effektive Verschiebekraft kann beispielsweise über den Druck, der an der ersten Seite des Ventils anliegt, und die Fläche an der Belastungsseite, die zu der ersten Seite hinweist, festgelegt sein. Beispielsweise kann das Ventilelement an seiner Belastungsseite durch Fluid von der ersten Seite aus und an seiner Gegenseite durch Fluid von der zweiten Seite aus mit Druck beaufschlagbar sein, wobei die effektive Verschiebekraft durch die Flächen an Gegenseite und Belastungsseite und durch den Unterschied zwischen den Drücken, die an den beiden Seiten des Ventils anliegen, festgelegt sein. Beispielsweise kann die Verschiebekraft dann, wenn das Verschiebeelement an seiner Belastungsseite und an seiner Gegenseite jeweils durch entsprechende Leitung von Fluid von der ersten Seite aus mit Druck beaufschlagbar ist, durch den Druck des Fluids an der ersten Seite und den Flächenunterschied zwischen der Fläche an der Belastungsseite und der Fläche an der Gegenseite festgelegt sein.

Die Federeinrichtung kann beispielsweise an einer Gegenseite des Verschiebeelements angeordnet sein. Jedenfalls ist das Ventil so ausgebildet, dass durch die relative Anordnung der Ventilelemente und der Federeinrichtung stets gewährleistet ist, dass die Federeinrichtung eine solche Rückstellkraft auf das Verschiebeelement ausübt, insbesondere in der Ruhelage des Ventils, dass die Rückstellkraft der effektiven Verschiebkraft entgegengesetzt ist, die ein Fluid durch eine Druckbeaufschlagung des Ventils von seiner ersten Seite aus über die Belastungsseite auf das Verschiebeelement ausüben kann. Insbesondere kann das Aufnahmeelement einen Anschlag aufweisen, gegen den die Federeinrichtung das Verschiebeelement in der Ruhelage presst.

Zumindest eines der Ventilelemente des erfindungsgemäßen Ventils weist einen Zylinderabschnitt auf, der mehrere Durchführungen aufweist. Beispielsweise kann dieses Ventilelement als Hohlzylinder ausgebildet sein, wobei die Durchführungen in dem Zylindermantel des Hohlzylinders angeordnet sind. Beispielsweise kann dieses Ventilelement auch als Vollzylinder ausgebildet sein, wobei die Durchführungen durch Einkerbungen entlang der Zylinderachse realisiert sein können, die beispielsweise über eine gewisse Länge des Zylinderabschnitts verlaufen können. Bei dem erfindungsgemäßen Ventil verläuft der Durchlasskanal stets durch zumindest einige der Durchführungen, und der Durchlassquerschnitt des Durchlasskanals ist durch einen Querschnitt dieser Durchführungen beschränkt, durch die der Durchlasskanal verläuft. Dabei ist zu berücksichtigen, dass in der Ruhelage des Ventils der Durchlassquerschnitt des Durchlasskanals vernachlässigbar klein ist, so dass ein Fluidstrom zwischen den beiden Seiten des Ventils nicht oder nur in ganz geringem Maße ermöglicht ist. Bei einer Auslenkung des Ventils aus seiner Ruhelage weist das Ventil dann einen Durchlasskanal mit einem gewissen Durchlassquerschnitt auf, wobei der Durchlassquerschnitt durch den Querschnitt der Durchführungen festgelegt ist, durch die der Durchlasskanal verläuft. Dabei gibt die Form des Querschnitts dieser Durchführungen, durch die der Durchlasskanal verläuft, eine Beschränkung des Durchlassquerschnitts vor. Der Durchlasskanal muss jedoch keineswegs immer durch den gesamten Querschnitt einer Durchführung verlaufen, durch die der Durchlasskanal verläuft. Vielmehr kann der Querschnitt der Durchführung zumindest teilweise versperrt sein, so dass der Durchlasskanal nicht über den gesamten Querschnitt dieser Durchführung sondern nur durch einen Anteil ihrer Querschnittsfläche verläuft. Auch in diesem Fall beschränkt der Querschnitt der Durchführung den Durchlassquerschnitt, da die Form des Querschnitts der Durchführung den Durchlassquerschnitt beschränkt. Selbstverständlich kann der Durchlasskanal auch durch eine Durchführung über ihren gesamten Querschnitt verlaufen, wobei dann die Querschnittsfläche der Durchführung den Durchlassquerschnitt beschränkt. Insbesondere kann der Durchlassquerschnitt der Summe der Anteile der Querschnittsflächen der Durchführungen entsprechen, durch die der Durchlasskanal verläuft.

Das andere Ventilelement des erfindungsgemäßen Ventils weist einen geschlossenen Zylindermantelabschnitt auf, der in der Ruhelage an dem einen Ventilelement anliegt, das die Durchführungen aufweist, und den Fluidstrom sperrt. Beispielsweise kann der geschlossene Zylindermantelabschnitt zumindest einigen der Durchführungen des einen Ventilelements gegenüberliegen, so dass er einen Fluidstrom durch die Durchführungen verhindern kann. Der geschlossene Zylindermantelabschnitt muss dabei nicht zwingend unmittelbar an den Durchführungen anliegen und damit einen jeglichen Fluidfluss durch die Durchführungen verhindern. Beispielsweise kann der geschlossene Zylinderabschnitt des anderen Ventilelements auch von den Durchführungen beabstandet den Durchführungen gegenüberliegen, so dass ein Zwischenraum zwischen den Durchführungen des einen Ventilelements und dem geschlossenen Zylinderabschnitt des anderen Ventilelements angeordnet ist. Ein Fluidstrom zwischen den beiden Seiten des Ventils kann durch den geschlossenen Zylindermantelabschnitt beispielsweise dennoch verhindert sein, wenn dieser Zwischenraum in der Ruhelage des Ventils geschlossene Wände aufweist, die ein Fließen eines Fluids zwischen den beiden Seiten verhindern. Dies kann durch das Anliegen des geschlossenen Zylindermantelabschnitts an dem einen Ventilelement gewährleistet sein.

Der geschlossene Zylindermantelabschnitt weist einen solchen Abschnitt eines Zylindermantels auf, dass er in der Ruhelage so an dem einen Ventilelement anliegt, dass ein Fluidstrom gesperrt ist. Der geschlossene Zylindermantelabschnitt kann beispielsweise eine sehr kurze axiale Erstreckung aufweisen und/oder in seinem Querschnitt nur einen Abschnitt der Zylindergrundfläche. Der geschlossene Zylindermantelabschnitt kann einen Abschnitt des Mantels eines Zylinders darstellen, dessen Zylinderachse in der Verschieberichtung verläuft. Beispielsweise kann das andere Ventilelement einen zylinderförmigen Durchgang aufweisen, in dem in der Ruhelage der Zylinderabschnitt mit den Durchführungen des einen Ventilelements zumindest abschnittsweise angeordnet ist. Beispielsweise kann der Zylinderabschnitt des einen Ventilelements als Hohlzylinder ausgebildet sein, in dem zumindest in der Ruhelage ein zylinderförmiger Abschnitt des anderen Ventilelements, der den geschlossenen Zylindermantelabschnitt aufweist, angeordnet ist. Beispielsweise können die Durchführungen in dem Zylinderabschnitt des einen Ventilelements in der Ruhelage dem geschlossenen Zylinderabschnitt dergestalt gegenüberliegen, dass dieser sie verschließt. Beispielsweise können die Durchführungen in dem Zylinderabschnitt des einen Ventilelements in der Ruhelage zur ersten Seite hin benachbart neben dem geschlossenen Zylindermantelabschnitt des anderen Ventilelements angeordnet sein. In jedem Fall liegt der geschlossene Zylindermantelabschnitt des anderen Ventilelements in der Ruhelage an dem einen Ventilelement, insbesondere an dem Zylinderabschnitt des einen Ventilelements mit den Durchführungen, an. Bei einer Auslenkung des Ventils aus seiner Ruhelage wird der Querschnitt von zumindest einigen der Durchführungen zumindest teilweise freigegeben. Dies erfolgt dadurch, dass die relative Position des geschlossenen Zylindermantelabschnitts zu den Durchführungen bei einer Auslenkung des Ventils aus seiner Ruhelage in der Verschieberichtung verändert wird. Somit ist in der Ruhelage ein Fluidstrom zwischen den beiden Seiten des Ventils gesperrt, da Fluid, das durch die Durchführungen durchtritt, durch den geschlossenen Zylindermantelabschnitt an dem Weiterfließen zur zweiten Seite hin gehindert wird. Dagegen kann bei einer Auslenkung des Ventils ein Fluidstrom durch den Durchlasskanal zwischen den beiden Seiten des Ventils fließen, wobei der Durchlasskanal durch die Durchführungen verläuft, die nicht durch den geschlossenen Zylidnermantelabschnitt versperrt sind.

In jedem Fall ist in dem erfindungsgemäßen Ventil bei einer bestimmten Auslenkung des Ventils aus seiner Ruhelage ein bestimmter Durchlasskanal mit einem bestimmten Durchlassquerschnitt angeordnet. Dabei ist bei dem erfindungsgemäßen Ventil durch die Auslenkung des Ventils, die unter Verschiebung des Verschiebeelements zum Aufnahmeelement in der Verschieberichtung erfolgt, der Durchlassquerschnitt einstellbar, wobei der Durchlassquerschnitt mit der Auslenkung zunimmt. Dem Fachmann sind verschiedene Gestaltungsmöglichkeiten für das erfindungsgemäße Ventil ersichtlich. Beispielsweise kann das Verschiebeelement als das eine Ventilelement ausgebildet sein, das die Durchführungen aufweist, wobei das Aufnahmeelement als das andere Ventilelement ausgebildet ist. Beispielsweise kann das Aufnahmeelement als das eine Ventilelement ausgebildet sein, das die Durchführungen aufweist, wobei das Verschiebeelement als das andere Ventilelement ausgebildet ist.

Erfindungsgemäß weist das Verschiebeelement einen Fluidkanal auf, der sich zumindest mit einer Komponente parallel zu der Verschieberichtung estreckt und eine fluidführende Verbindung zwischen der Belastungsseite und einer der Belastungsseite gegenüberliegenden Gegenseite des Verschiebeelements gewährleistet, wobei an der Gegenseite eine Gegendruckkammer vorgesehen ist, die zur Aufnahme und zur Aufstauung von durch die fluidführende Verbindung an die Gegenseite gelangtem Fluid ausgebildet ist zum Gewährleisten eines Gegendrucks auf das Verschiebeelement an seiner Gegenseite, der eine Kraft auf das Verschiebeelement gewährleistet, die der Verschiebekraft entgegengesetzt ist. Der Fluidkanal kann beispielsweise so ausgebildet sein, dass sein Querschnitt mindestens 10%, insbesondere mindestens 30%, insbesondere mindestens 50% des maximalen Durchlassquerschnitts entspricht. Durch einen großen Querschnitt des Fluidkanals kann eine besonders gute Funktionalität der Gegendruckkammer gewährleistet sein. Die Gegendruckkammer kann beispielsweise in dem Aufnahmeelement angeordnet sein. Die Gegendruckkammer kann beispielsweise von der zweiten Seite so getrennt sein, dass ein Fluidfluss aus der Gegendruckkammer zur zweiten Seite hin nur über den Durchlasskanal erfolgen kann, damit Druck, der sich von der ersten Seite aus in der Gegendruckkammer aufbaut, nicht unmittelbar zur zweiten Seite hin abgebaut werden kann.

Dem Fachmann ist ersichtlich, dass das erfindungemäße Ventil den Vorteil mit sich bringt, dass durch das Vorsehen eines Durchlasskanals, der durch die Durchführungen verläuft, und durch die Einstellbarkeit des Durchlassquerschnitts über die Auslenkung des Ventils aus seiner Ruhelage ein Ventil bereitgestellt ist, das entscheidende Vorteile im Vergleich zu herkömmlichen Ventilen mit sich bringt, was entsprechende Vorteile für einen Hydraulikdämpfer mit einem solchen Ventil bedeutet. Denn dadurch, dass der Durchlassquerschnitt mit der Auslenkung des Ventils zunimmt, kann beispielsweise vorgesehen sein, dass ein Durchlasskanal mit einem sehr geringen Querschnitt bei einer geringen Auslenkung des Ventils aus seiner Ruhelage vorliegt, so das bei dem Vorliegen eines kleinen Druckunterschieds zwischen den Drücken, die an erster und zweiter Seite Seite des Ventils anliegen, ein entsprechend geringer Fluidfluss zwischen den beiden Seiten ermöglicht ist, so dass eine dem kleinen Durckunterschied entsprechende Dämpfung ermöglicht ist. Dies entspricht dem Fall, dass zwischen zwei Bauelementen, zwischen die der Hydraulikdämpfer mit einem entsprechenden erfindungsgemäßen Ventil montiert ist, eine kleine Kraft anliegt. Falls eine entsprechend große Kraft anliegt, d. h. ein großer Druckunterschied an den beiden Seiten des Ventils anliegt, kann das Ventil beispielsweise stark ausgelenkt werden, so dass der Durchlassquerschnitt des Ventils größer wird, wodurch eine der großen Kraft angepasste Dämpfung durch das Ventil ermöglicht wird. Das erfindungsgemäße Ventil überwindet somit den Nachteil herkömmlicher Ventile, dass eine Dämpfung nur abrupt ab dem Überschreiten eines Mindestbetrags einer Kraft, d. h. ab dem Überschreiten eines Mindestbetrags bei dem Druckunterschied zwischen den an der ersten und der zweiten Seite des Ventils anliegenden Drücken möglich ist, und dass das Ventil nur eine Dämpfung in einem kleinen Funktionsbereich ermöglicht, in dem eine Kraft liegt, die zwischen zwei Bauelementen vorliegt, zwischen denen ein herkömmlicher Hydraulikdämpfer zum Dämpfen eingesetzt wird. Darüber hinaus bietet das erfindungsgemäße Ventil den Vorteil, dass der Durchlassquerschnitt unabhängig von der Ausgestaltung der Belastungsseite des Verschiebeelements einstellbar ist. Damit kann bei einem erfindungsgemäßen Ventil die Abhängigkeit zwischen dem an der ersten Seite anliegenden Druck und dem Durchlassquerschnitt konstruktiv leicht eingestellt werden, da die Rückstellkraft der Federeinrichtung, die Fläche der Belastungsseite des Verschiebeelements und der Querschnitt der Durchführungen unabhängig voneinander konstruktiv einstellbar sind.

Durch die erfindungsgemäße Ausgestaltung des Fluidkanals kann wie oben erläutert gewährleistet sein, dass die effektive Verschiebekraft, die ein Fluid von der ersten Seite aus auf das Verschiebeelement in dem Ventil ausüben kann, auch bei einem großen Druck relativ geringgehalten werden kann, so dass beispielsweise eine Federeinrichtung mit einer geringen Federkraft vorgesehen werden kann, die eine trotzdem ausreichende Rückstellkraft auf das Verschiebeelement ausübt, um das Verschiebeelement bei einer geringen Druckbeaufschlagung von der ersten Seite aus in der Ruhelage zu halten und bei einer stärkeren Druckbeaufschlagung von der ersten Seite aus nur langsam entlang des Verschiebewegs verschieben zu lassenn. Generell ist dabei zu berücksichtigen, dass das erfindungsgemäße Ventil so ausgebildet ist, dass der Fluidstrom gesperrt ist, solange die Rückstellkraft die Verschiebekraft übersteigt, wohingegen das Ventil einen Durchlasskanal aufweist, wenn die Verschiebekraft die Rückstellkraft um einen ausreichend großen Betrag übersteigt, wobei die Auslenkung des Ventils, und damit eine Verschiebung des Verschiebeelements entlang des Verschiebewegs aus der Ruhelage, mit steigender Verschiebekraft zunimmt.

Wesentlich für das erfindungsgemäße Ventil ist die Einstellbarkeit des Durchlassquerschnitts durch die Auslenkung des Ventils. Dies ist bei herkömmlichen Ventilen nicht möglich. Die Einstellbarkeit kann erfindungsgemäß auf verschiedene Art und Weise realisiert sein. Beispielsweise können mehrere Durchführungen entlang des Verschiebewegs zueinander versetzt angeordnet sein, so dass bei einer Auslenkung des Verschiebeelements entlang des Verschiebewegs der Durchlassquerschnitt entsprechend der zunehmenden Anzahl der Durchführungen, durch die der Durchlasskanal verläuft, zunimmt. Beispielsweise können die Durchführungen auch so ausgebildet sein, dass sie sich über eine erhebliche Länge entlang des Verschiebewegs erstrecken. Beispielsweise kann in diesem Falle eine zunehmende Auslenkung des Ventils unter Verschiebung des Verschiebeelements bewirken, dass der Anteil der Querschnittsfläche einer Durchführung, durch den der Durchlasskanal verläuft, zunimmt. Beispielsweise können auch entlang des Verschiebewegs Durchführungen mit unterschiedlichem Querschnitt angeordnet sein, wobei bei zunehmender Auslenkung des Ventils der Durchlasskanal durch Durchführungen mit einem größeren Querschnitt verläuft. In jedem Fall ist das erfindungsgemäße Ventil so ausgebildet, dass über einen erheblichen Verschiebeweg hinweg der Durchlassquerschnitt des Durchlasskanals einstellbar und von der Ruhelage aus vergrößerbar ist, so dass das erfindungsgemäße Ventil in einem Hydraulikdämpfer die Eignung des Hydraulikdämpfers für eine Dämpfung in einem großen Funktionsbereich gewährleisten kann. Die Bestandteile des erfindungsgemäßen Ventils können beispielsweise so ausgebildet sein, dass der Durchlassquerschnitt sich über einen Verschiebeweg von über 0,2 mm hinweg, insbesondere über 0,2 mm bis 2 mm hinweg, insbesondere über 0,2 mm bis 10 mm hinweg mit zunehmender Auslenkung vergrößert. Insbesondere kann das Ventil so ausgebildet sein, dass der Durchlassquerschnitt nur in einem Auslenkungsbereich mit zunehmender Auslenkung zunimmt, wobei der Auslenkungsbereich einem Abschnitt des Verschiebewegs in Bezug auf die Auslenkung des Verschiebeelements entspricht. Insbesondere kann der Durchlassquerschnitt bei einer Auslenkung, die in der Mitte des Auslenkungsbereichs liegt, weniger als die Hälfte, insbesondere weniger als ein Drittel des maximalen Durchlassquerschnitts bei einer Auslenkung am oberen Ende des Auslenkungsbereichs betragen.

Der Zylinderabschnitt des einen Ventilelements, der die Durchführungen aufweist, ist nach Art eines Zylinders ausgebildet. Die Durchführungen können durch den Zylindermantel des Zylinderabschnitts verlaufen. Der Zylinderabschnitt kann beispielsweise nach Art eines Zylinders mit einem polygonen Querschnitt ausgebildet sein.

Die Ausbildung des Zylinderabschnitts als ein Zylinder mit einem kreisrunden Querschnitt kann besonders vorteilhaft sein zum Gewährleisten der Verschiebbarkeit und Führung der beiden Ventilelemente zueinander. Dadurch, dass die Durchführungen durch den Zylindermantel des Zylinderabschnitts verlaufen, ergibt sich eine Einstellbarkeit des Durchlassquerschnitts entlang eines Verschiebewegs, wobei der Verschiebeweg insbesondere parallel zu der Zylinderachse des Zylinderabschnitts verlaufen kann. In einer Ausführungsform kann der Zylinderabschnitt so ausgebildet sein, dass er von einer idealen Zylinderform abweicht und kegelstumpfartig ausgebildet ist, wodurch die Einstellbarkeit des Durchlassquerschnitts durch eine Auslenkung des Ventils noch verbessert sein kann. Zur Realisierung einer besonders guten Führung zwischen den beiden Ventilelementen, kann eine Ausgestaltung des Zylinderabschnitts als gerader Zylinder besonders vorteilhaft sein. Insbesondere kann es vorteilhaft sein, dass der Zylinderabschnitt des einen Ventilelements, der die Durchführungen aufweist, als Hohlzylinder ausgebildet ist. Dabei kann der Durchlasskanal durch das Innere des Hohlzylinders, durch in dem Zylindermantel angeordnete Durchführungen und durch ein sich an das Äußere des Hohlzylinders anschließendes Kanalstück verlaufen.

Der Zylinderabschnitt des einen Ventilelements und der geschlossene Zylindermantelabschnitt des anderen Ventilelements können so korrespondierend zueinander ausgebildet sein, dass einer der Abschnitte als Hohlzylinder ausgebildet ist, in dem der andere Abschnitt zumindest abschnittsweise in Passung angeordnet ist, so dass eine Führung der beiden Ventilelemente zueinander gewährleistet ist entlang eines Verschiebewegs, der parallel zu den Zylinderachsen der beiden Abschnitte verläuft, die ebenfalls parallel zueinander angeordnet sind. Beispielsweise kann einer der Abschnitte als Hohlzylinder, der andere als Vollzylinder ausgebildet sein, wobei in einem der Abschnitte die Durchführungen angeordnet sind. Beispielsweise können beide Abschnitte nach Art eines Hohlzylinders ausgebildet sein. Beispielsweise können die Abschnitte in einer solchen Spielpassung zueinander angeordnet sein, dass hydraulische Flüssigkeit zwischen die Abschnitte gelangen kann zum Verringern der Haftung der beiden Abschnitte aneinander. Die Spielpassung kann so ausgestaltet sein, dass geringe Mengen an hydraulischer Flüssigkeit von der ersten Seite zu der zweiten Seite des Ventils zwischen den Abschnitten fließen können, wenn das Ventil von seiner ersten Seite aus über hydraulische Flüssigkeit mit Druck beaufschlagt wird. Insbesondere können die beiden Ventilelemente so in Passung zueinander angeordnet sein, dass sie dichtungsfrei zueinander geführt sind. Dies bedeutet, dass in keiner relativen Position der beiden Ventilelemente zueinander eine vollkommene Abdichtung der beiden Seiten des Ventils gewährleistet ist, so dass stets hydraulische Flüssigkeit durch das Ventil von einer der Seiten zu der anderen Seite fließen kann. Durch eine dichtungsfreie Passung kann gewährleistet sein, dass ein Hydraulikdämpfer, in dem das Ventil wie beschrieben angeordnet ist, geringfügige Krafteinflüsse dynamisch aufnehmen kann, so dass eine Spannung zwischen Bauelementen, zwischen denen der Hydraulikdämpfer gespannt ist, die beispielsweise durch unterschiedliche Wärmeausdehnungen auftreten können, vermieden werden können.

Ein solcher Fluss von hydraulischer Flüssigkeit, der durch eine Spielpassung der beiden Ventilelemente ermöglicht sein kann, kann beispielsweise auch in der Ruhelage ermöglicht sein. In jedem Fall beträgt der Strömungsquerschnitt, durch den eine hydraulische Flüssigkeit zwischen den Ventilelementen von einer Seite zu der anderen Seite des Ventils in der Ruhelage des Ventils fließen kann, nur einen Bruchteil des größtmöglichen Durchlassquerschnitts bei einer entsprechenden Auslenkung des Ventils, insbesondere beträgt ein solcher Strömungsquerschnitt weniger als 1 % des größtmöglichen Durchlassquerschnitts.

Beispielsweise kann ein Abschnitt des anderen Ventilelements als Hohlzylinder ausgebildet sein, der den geschlossenen Zylindermantelabschnitt aufweist, wobei insbesondere axial auf den geschlossenen Zylindermantelabschnitt folgend ein Zylindermantelabschnitt mit Durchlassöffnungen angeordnet sein kann. Dabei wird auf die Achse des Zylinders Bezug genommen, den der geschlossene Zylindermantelabschnitt abschnittsweise einschließt. Der geschlossene Zylindermantelabschnitt kann in der Ruhelage an dem einen Ventilelement anliegen, insbesondere kann er bei jeder Auslenkung des Ventils an dem einen Ventilelement anliegen. Die Ausgestaltung des Zylindermantelabschnitts als Hohlzylinder bezieht sich darauf, dass der geschlossene Zylindermantelabschnitt so ausgebildet ist, dass in ihm ein Zylinder axial verschiebbar geführt werden kann. In der Ruhelage können die Durchführungen in dem geschlossenen Zylindermantelabschnitt oder zu einer der beiden Seiten des Ventils hin axial neben dem geschlossenen Zylindermantelabschnitt angeordnet sein. Bei einer bestimmten Auslenkung des Ventils aus seiner Ruhelage unter einer Verschiebung der Ventilelemente zueinander entlang des Verschiebewegs, der axial zur Zylinderachse des geschlossenen Zylindermantelabschnitts verläuft, ist der Zylinderabschnitt des einen Ventilelements, der die Durchführungen aufweist, so zu dem geschlossenen Zylindermantelabschnitt des anderen Ventils verschiebbar, eine bestimmte Anzahl an Durchführungen zumindest teilweise axial neben dem geschlossenen Zylinderabschnitt angeordnet sind. Die Einstellbarkeit des Durchlassquerschnitts kann durch das Vorsehen von Durchlassöffnungen in einem Zylindermantelabschnitt, der axial auf den geschlossenen Zylindermantelabschnitt folgt, noch verbessert sein. Denn dadurch kann der Durchlassquerschnitt nicht nur durch den Querschnitt der Durchführungen, sondern auch durch den Querschnitt der Durchlassöffnungen beschränkt sein. Insbesondere verläuft dann der Durchlasskanal zumindest bei bestimmten Auslenkungen des Ventils sowohl durch Durchlassöffnungen als auch durch Durchführungen. Ausgehend von der Ruhelage, bei dem der Fluidstrom zwischen den Seiten gesperrt ist, kann dann durch eine Auslenkung des Ventils eine solche Verschiebung der Ventilelemente entlang des Verschiebewegs zueinander realisierbar sein, dass zumindest einige der Durchführungen zumindest teilweise zumindest einigen der Durchlassöffnungen gegenüber angeordnet sind. Die Anzahl der einander gegenüberliegenden Durchführungen und Durchlassöffnungen und die sich überschneidende Querschnittsfläche der Durchlassöffnungen und Durchführungen hängt von der Auslenkung ab. Einer bestimmten Auslenkung kann eine bestimmte Querschnittsfläche zugeordnet sein, in der sich die Durchlassöffnungen und die Durchführungen überschneiden. Die Einstellbarkeit des Durchlassquerschnitts kann noch dadurch verbessert sein, dass das andere Ventilelement zwei durch Durchlassöffnungen in der Verschieberichtung voneinander getrennte geschlossene Zylindermantelabschnitte aufweist, wobei insbesondere das eine Ventilelement zwei in der Verschieberichtung voneinander getrennte Bereiche aufweist, in denen jeweils Durchführungen angeordnet sind.

Vorzugsweise nimmt die gemeinsame Querschnittsfläche der Durchführungen, durch die der Durchlasskanal verläuft, mit der Auslenkung des Ventils aus seiner Ruhelage unter Verschiebung des Verschiebeelements entlang des Verschiebewegs zu. Dasselbe kann für die Durchlassöffnungen gelten. Die gemeinsame Querschnittsfläche der Durchführungen, durch die der Durchlasskanal verläuft, ist durch die Summe der Querschnittsflächen der Durchführungen als solche festgelegt. Dabei muss der Durchlassquerschnitt nicht der gemeinsamen Querschnittsfläche entsprechen, da zumindest einige der Durchführungen, durch die der Durchlasskanal verläuft, zumindest teilweise versperrt sein können, beispielsweise durch den geschlossenen Zylindermantelabschnitt des anderen Ventilelements. Insbesondere kann der Anteil der Querschnittsfläche einer Durchführung, durch die der Durchlasskanal verläuft, mit zunehmender Auslenkung des Ventils zunehmen, indem mit zunehmender Auslenkung ein geringerer Anteil der Querschnittsfläche dieser Durchführung versperrt ist. Dadurch, dass sich die gemeinsame Querschnittsfläche der Durchführungen, durch die der Durchlasskanal verläuft, mit zunehmender Auslenkung des Ventils vergrößert, kann auch der Durchlassquerschnitt mit zunehmender Auslenkung des Ventils zunehmen. Entsprechend kann das Ventil bei dem Einsatz in einem Hydraulikdämpfer gewährleisten, dass bei dem Anliegen einer großen Kraft an den beiden Seiten des Hydraulikdämpfers und damit eines großen Druckunterschieds zwischen den beiden Seiten des Ventils eine hohe Durchflussmenge an hydraulischer Flüssigkeit durch das Ventil gewährleistet ist, insbesondere über einen größeren Durchlassquerschnitt, als bei dem Anliegen einer kleineren Kraft. Dadurch kann das Ventil besonders variabel für große Funktionsbereiche eingesetzt werden.

Vorzugsweise sind zumindest einige der Durchführungen mit ihren Mittelpunkten in der Verschieberichtung zueinander versetzt angeordnet, wobei insbesondere zumindest einige der Durchführungen als elliptische Bohrung ausgebildet sind. Beispielsweise können die elliptischen Bohrungen durch kreisrunde oder ovale Bohrungen realisiert sein. Dadurch kann bei einer Auslenkung des Ventils aus seiner Ruhelage die Anzahl der Durchführungen, durch die der Durchlasskanal verläuft, vergrößert werden, beispielsweise indem mit zunehmender Auslenkung eine größere Anzahl der Durchführungen des einen Ventilelements entlang der Verschieberichtung benachbart zu dem geschlossenen Zylinderabschnitt des anderen Ventilelements angeordnet sind. Beispielsweise können die mit ihren Mittelpunkten zueinander versetzt angeordneten Durchführungen auch unterschiedliche Durchmesser aufweisen. Beispielsweise kann der mittlere Durchmesser der Durchführungen, durch die der Durchlasskanal bei kleiner Auslenkung verläuft, kleiner sein als der mittlere Durchmesser der Durchlassöffnungen, durch die der Durchlasskanal bei großer Auslenkung verläuft. Beispielsweise kann bei einer von der Ruhelage aus sich vergrößernden Auslenkung der Durchlasskanal zunächst durch Durchführungen mit einem Durchmesser von ca. 2 mm verlaufen, bei weiterer Auslenkung zusätzlich durch Durchführungen mit einem Durchmesser von ca. 5 mm. Insbesondere kann die Anzahl der Durchführungen in der Verschieberichtung variieren, wobei insbesondere die Anzahl der Durchführungen in der Verschieberichtung dergestalt zunehmen kann, dass die Anzahl der Durchführungen, durch die der Durchlasskanal verläuft, zunimmt, je weiter das Ventil aus seiner Ruhelage unter Verschiebung des Verschiebeelements entlang des Verschiebewegs ausgelenkt ist. Dadurch kann die Einstellbarkeit des Durchlassquerschnitts in Abhängigkeit von der Auslenkung noch verbessert sein.

Insbesondere können die Durchführungen, die in der Verschieberichtung zueinander versetzt sind, sich in ihrer Querschnittsfläche, insbesondere in ihrem Durchmesser, voneinander zumindest teilweise unterscheiden, wobei insbesondere die Querschnittsfläche der Durchführungen in der Verschieberichtung dergestalt zunehmen kann, dass die Durchführungen, durch die der Durchlasskanal verläuft, eine umso größere Querschnittsfläche aufweisen, je weiter das Ventil aus seiner Ruhelage ausgelenkt ist. Dadurch, dass sich die Durchführungen, die zueinander versetzt sind, in ihrer Querschnittsfläche zumindest teilweise voneinander unterscheiden, kann gewährleistet sein, dass je nach Auslenkung des Ventils der Durchlasskanal durch Durchführungen mit einer unterschiedlichen Querschnittsfläche verläuft, wodurch je nach Auslenkung des Ventils ein anderer Durchlassquerschnitt des Durchlasskanals vorliegen kann. Hierdurch kann die Einstellbarkeit des Durchlassquerschnitts in Abhängigkeit von der Auslenkung des Ventils noch weiter verbessert sein. Indem die Querschnittsfläche der Durchführungen, durch die der Durchlasskanal verläuft, mit zunehmender Auslenkung zunimmt, kann eine große Durchflussmenge von hydraulischer Flüssigkeit durch das Ventil bei einer großen Auslenkung, und damit bei dem Vorliegen eines großen Druckunterschieds zwischen den Drücken an den beiden Seiten des Ventils ermöglicht sein. Dabei kann sich die Querschnittsfläche der Durchführungen, durch die der Durchlasskanal verläuft, dergestalt ändern, dass sich die gemittelte Querschnittsfläche aller Durchführungen, d. h. die gemeinsame Querschnittsfläche aller Durchführungen, durch die der Durchlasskanal verläuft, geteilt durch die Anzahl der Durchführungen, durch die der Durchlasskanal verläuft, mit zunehmender Auslenkung vergrößert.

In einer Ausführungsform weist das erfindungsgemäße Ventil einen Bypass zum ununterbrochenen Verbinden der beiden Seiten des Ventils auf. Beispielsweise kann der Bypass durch eine Bohrung realisiert sein. Beispielsweise kann der Bypass duch das Verschiebeelement verlaufen und sich von der Belastungsseite des Verschiebeelements zu einer der Belastungsseite gegenüberliegenden Gegenseite des Verschiebeelements hin erstrecken. Der Bypass kann einen Druckausgleich zwischen Drücken, die an den beiden Seiten des Ventils anliegen, auch dann gewährleisten, wenn der Druckunterschied nur sehr gering ist. Dabei ermöglicht der Bypass nur einen Fluidtsrom mit einem sehr geringen Strömungsquerschnitt. Beispielsweise kann der Strömungsquerschnitt des Bypass weniger als 10 %, insbesondere weniger als 5 %, insbesondere weniger als 1 % des maximalen Durchlassquerschnitts des Ventils ermöglichen.

Vorzugsweise ist eine effektive Fläche des Verschiebeelements, über die bei einer Druckbeaufschlagung des Verschiebeelements durch ein Fluid von der ersten Seite aus die effektive Verschiebekraft auf das Verschiebeelement ausübbar ist, geringer als der Querschnitt des Zylinderabschnitts, in dem die Durchführungen angeordnet sind. Für den Fall, dass eines der Ventilelemente Durchführungen aufweist und das andere der Ventilelemente Durchlassöffnungen, kann die effektive Fläche kleiner als der Querschnitt der jeweiligen Abschnitte sein, in denen die Durchführungen bzw. die Durchlassöffnungen angeordnet sind. Die effektive Fläche bezeichnet dabei die Fläche, über die bei einer Druckbeaufschlagung des Ventils von der ersten Seite aus die effektive Verschiebekraft auf das Verschiebeelement tatsächlich ausgeübt werden kann. Bei einer Ausgestaltung des Verschiebeelements als Vollzylinder, wobei die Belastungsseite des Verschiebeelements eine ebene Kreisfläche ist und senkrecht zu dem Verschiebeweg des Verschiebeelements verläuft, der parallel zu der Zylinderachse des Verschiebeelements ist, ist die effektive Fläche beispielsweise mit der Kreisfläche der Belastungsseite des Verschiebeelements gleichzusetzen.

In jedem Fall ist die effektive Fläche anhand des Querschnitts des Verschiebeelements an seiner Belastungsseite zu ermitteln, der sich senkrecht zu dem Verschiebeweg erstreckt, da nur durch die Druckbeaufschlagung in Richtung des Verschiebewegs die effektive Verschiebekraft auf das Verschiebeelement erzeugbar ist. Bei einer Ausgestaltung des Verschiebeelements als Vollzylinder, der jedoch entlang seiner Zylinderachse eine Bohrung aufweist, die sich durch den gesamten Zylinder erstreckt, wobei an der der Belastungsseite gegenüberliegenden Gegenseite des Verschiebeelements eine Gegendruckkammer vorgesehen ist, in den eine hydraulische Flüssigkeit bei einer Druckbeaufschlagung des Verschiebeelements von der ersten Seite aus gelangen kann, ist die effektive Fläche dergestalt zu bestimmten, dass sie der Differenz zwischen der Querschnittsfläche des Verschiebeelements an seiner Belastungsseite und der Querschnittsfläche des Verschiebeelements an seiner Gegendruckseite entspricht, da das Verschiebeelement an seiner Gegendruckseite eine Kraftbeaufschlagung erfährt, die die effektive Verschiebekraft verringert. Bei einer abgestufen Ausgestaltung des Verschiebeelements dergestalt, dass die Querschnittsfläche des Verschiebeelements an der Belastungsseite größer ist als die Querschnittsfläche des Verschiebeelements an der Gegenseite, ist die effektive Fläche aus der Differenz der Querschnitte an den beiden Seiten zu berechnen.

Dadurch, dass die effektive Fläche geringer ist als der Querschnitt des Zylinderabschnitts, in dem die Durchführungen angeordnet sind, kann zum einen wegen des großen Querschnitts des Zylinderabschnitts ein großer Durchlassquerschnitt durch die Durchführungen realisierbar sein, während zum anderen die effektive Verschiebekraft geringgehalten werden kann. Dadurch kann beispielsweise eine Federeinrichtung vorgesehen werden, die eine relativ geringe Rückstellkraft auf das Verschiebeelement ausübt, so dass günstige Federeinrichtungen verwendet werden können, mit denen das erfindungsgemäße Ventil mit seiner vollständigen Funktionalität hergestellt werden kann.

Vorzugsweise verändert sich der Durchmesser des Verschiebeelements zumindest abschnittsweise, insbesondere stufenförmig. Insbesondere kann sich der Durchmesser des Verschiebeelements entlang der Verschieberichtung zur Belastungsseite hin verringern. Dadurch kann beispielsweise die effektive Fläche an der Belastungsseite des Verschiebeelements, über die das Verschiebeelement von der ersten Seite aus mit Druck beaufschlagbar sein kann, unabhängig von dem Durchmesser des Verschiebeelements an anderen Stellen entlang der Verschieberichtung eingestellt sein. Insbesondere ist zu berücksichtigen, dass die Verschieberichtung durch die Anordnung des Ventils umfassend die beiden Ventilelemente vorgegeben ist und insbesondere mit einer Zylinderachse des Verschiebeelements zusammenfallen kann oder parallel zu der Zylinderachse sein kann, die das Verschiebeelement in einem Abschnitt aufweist, in dem es zylinderartig ausgebildet ist.

In einer Ausführungsform weist das Verschiebeelement einen Fluidkanal auf, der sich zumindest mit einer Komponente parallel zu der Verschieberichtung estreckt und eine fluidführende Verbindung zwischen der Belastungsseite und einer der Belastungsseite gegenüberliegenden Gegenseite des Verschiebeelements gewährleistet, wobei an der Gegenseite eine Gegendruckkammer vorgesehen ist, die zur Aufnahme und zur Aufstauung von durch die fluidführende Verbindung an die Gegenseite gelangtem Fluid ausgebildet ist zum Gewährleisten eines Gegendrucks auf das Verschiebeelement an seiner Gegenseite, der eine Kraft auf das Verschiebeelement gewährleistet, die der Verschiebekraft entgegengesetzt ist. Der Fluidkanal kann beispielsweise so ausgebildet sein, dass sein Querschnitt mindestens 10%, insbesondere mindestens 30%, insbesondere mindestens 50% des maximalen Durchlassquerschnitts entspricht. Durch einen großen Querschnitt des Fluidkanals kann eine besonders gute Funktionalität der Gegendruckkammer gewährleistet sein. Die Gegendruckkammer kann beispielsweise in dem Aufnahmeelement angeordnet sein. Die Gegendruckkammer kann beispielsweise von der zweiten Seite so getrennt sein, dass ein Fluidfluss aus der Gegendruckkammer zur zweiten Seite hin nur über den Durchlasskanal erfolgen kann, damit Druck, der sich von der ersten Seite aus in der Gegendruckkammer aufbaut, nicht unmittelbar zur zweiten Seite hin abgebaut werden kann. Durch die entsprechende Ausgestaltung kann wie oben erläutert gewährleistet sein, dass die effektive Verschiebekraft, die ein Fluid von der ersten Seite aus auf das Verschiebeelement in dem Ventil ausüben kann, auch bei einem großen Druck relativ geringgehalten werden kann, so dass beispielsweise eine Federeinrichtung mit einer geringen Federkraft vorgesehen werden kann, die eine trotzdem ausreichende Rückstellkraft auf das Verschiebeelement ausübt, um das Verschiebeelement bei einer geringen Druckbeaufschlagung von der ersten Seite aus in der Ruhelage zu halten und bei einer stärkeren Druckbeaufschlagung von In einer Ausführungsform weist die Federeinrichtung ein Federelement und ein Stützelement auf, wobei das Stützelement mit dem Aufnahmeelement verbunden ist. Das Stützelement kann beispielsweise integral mit dem Aufnahmeelement ausgebildet sein oder ein separates Bauteil darstellen, das in dem einsatzbereiten Ventil mit dem Aufnahmeelement verbunden ist. Das Stützelement kann einen Durchlass zum Ermöglichen eines Fluidflusses durch das Stützelement aufweisen. Beispielsweise kann die Verbindung über ein Verschrauben oder eine Presspassung hergestellt sein. Über das Stützelement ist gewährleistet, dass die Federkraft zwischen dem Aufnahmeelement und dem Verschiebeelement wirkt. Dadurch kann der relativen Verschiebung zwischen Verschiebeelement und Aufnahmeelement durch eine Druckbeaufschlagung des Verschiebeelements an seiner Belastungsseite besonders gut entgegengewirkt sein. Vorzugsweise weist die Federeinrichtung ferner eine Einstelleinrichtung auf, mit der das Federelement zwischen dem Stützelement und dem Verschiebeelement vorspannbar ist zum Einstellen der Rückstellkraft, die die Federeinrichtung in Ruhelage auf das Verschiebeelement ausübt. Entsprechend kann über die Einstelleinrichtung der Mindestbetrag der Verschiebekraft eingestellt werden, der erforderlich ist, damit das Ventil aus seiner Ruhelage ausgelenkt werden kann. Entsprechend kann über die Einstelleinrichtung eine Verschiebekraft einstellbar sein, die erforderlich ist, damit das Ventil einen Durchlasskanal aufweist. Entsprechend kann eine bestimmte Verschiebekraft einstellbar sein, die für die Realisierung eines Durchlasskanals in dem Ventil mit einem bestimmten Durchlassquerschnitt erforderlich ist. Entsprechend kann bei dem Einsatz des erfindungsgemäßen Ventils mit der genannten Ausführungsform eine Druckdifferenz einstellbar sein, die zwischen den Teilkammern des Hydraulikdämpfers herrschen muss, damit das Ventil einen Durchlasskanal mit einem bestimmten Durchlassquerschnitt aufweist.

Vorzugsweise weist das erfindungsgemäße Ventil eine Dämpfungseinrichtung auf, wobei die Dämpfungseinrichtung zumindest eine Dämpfungskammer umfasst, die zwischen dem Aufnahmeelement und dem Verschiebeelement angeordnet ist und deren Volumen von der Position des Verschiebeelements entlang des Verschiebewegs abhängt, wobei die Dämpfungseinrichtung einen Dämpfungsbypass aufweist, über den die Dämpfungskammer mit der ersten und/oder zweiten Teilkammer verbindbar ist. Das Volumen der Dämpfungskammer kann beispielsweise in der Ruhelage des Ventils, und damit in der Ruhelage des Verschiebeelements, vernachlässigbar gering sein. Entsprechend ist dann auch keine Verbindung der - in der Ruhelage nicht vorhandenen - Dämpfungskammer mit einer Teilkammer über einen Dämpfungsbypass möglich. Der Dämpfungsbypass kann so in dem Aufnahmeelement oder dem Verschiebeelement angeordnet sein, dass er eine Verbindung zwischen der Dämpfungskammer und zumindest einer der Teilkammern immer dann gewährleistet, wenn das Verschiebeelement aus seiner Ruhelage ausgelenkt ist und eine Dämpfungskammer vorliegt. Beispielsweise kann der Bypass in dem Aufnahmeelement angeordnet sein, beispielsweise in dem Verschiebeelement. Beispielsweise kann der Dämpfungsbypass als Kanalbypass, wie etwa eine Bohrung, ausgebildet sein, beispielsweise als Kanalbypass in dem Verschiebeelement und/oder in dem Aufnahmeelement. Beispielsweise kann der Dämpfungsbypass über ein Spiel zwischen den beiden Ventilelementen realisiert sein, insbesondere über eine Spielpassung zwischen den Ventilelementen. Beispielsweise kann hierzu der Zylinderabschnitt des einen Ventilelements zu dem geschlossenen Zylindermantelabschnitt des anderen Ventilelements in einer Spielpassung angeordnet sein.

Die Verbindbarkeit der Dämpfungskammer mit zumindest einer der Teilkammern über den Bypass kann dadurch gewährleistet sein, dass der Bypass in zumindest eine Seite des Ventils mündet, so dass bei einer Verbindung des Ventils mit einer ersten Teilkammer an seiner ersten Seite und einer zweiten Teilkammer an seiner zweiten Seite, beispielsweise bei dem Einsatz des erfindungsgemäßen Ventils in einem wie oben beschriebenen Hydraulikdämpfer, eine Verbindung zwischen der jeweiligen Teilkammer und der Dämpfungskammer hergestellt ist. Beispielsweise kann der Dämpfungsbypass durch das Aufnahmeelement verlaufen und in eine der beiden Seiten des Ventils münden, beispielsweise kann der Dämpfungskanal in dem Verschiebeelement angeordnet sein und in die andere der beiden Seiten des Ventils münden. Beispielsweise können zwei Dämpfungsbypässe vorgesehen sein, die beispielsweise beide in dieselbe Seite oder jeweils in verschiedene Seiten des Ventils münden können.

Über das Anordnen von Dämpfungskammer und Dämpfungsbypass kann ein noch besseres Dämpfungsverhalten des Hydraulikdämpfers mit dem erfindungsgemäßen Ventil gewährleistet sein. Denn Dämpfungskammer und Dämpfungsbypass können die Auslenkung des Verschiebeelements aus seiner Ruhelage bei einer Druckbeaufschlagung des Ventils von seiner ersten Seite aus verlangsamen, da der Dämpfungsbypass nur einen geringen Fluidfluss in die Dämpfungskammer zulässt und zum einen eine Veränderung des Volumens der Dämpfungskammer für eine Auslenkung erforderlich ist und zum anderen die Volumenveränderung einen Fluidfluss durch den Dämpfungsbypass erfordert. Dadurch kann beispielsweise bei dem Einsatz eines entsprechenden erfindungsgemäßen Ventils in einem Hydraulikdämpfer dem ruckartigen Verschieben von Bauelementen, zwischen die der Hydraulikdämpfer montiert ist, entgegengewirkt sein. Darüber hinaus kann sich ein entsprechender Hydraulikdämpfer besonders gut zum Dämpfen von Schwingungen zwischen Bauelementen eignen.

Vorzugsweise weisen das Verschiebeelement und das Aufnahmeelement jeweils eine in der Verschieberichtung abgestufte Form auf, wobei die Dämpfungskammer zwischen die abgestufte Form bildenden Abstufungen der beiden Ventilelemente ausgebildet ist. Dadurch kann besonders einfach und effektiv eine Dämpfungskammer in dem erfindungsgemäßen Ventil realisiert sein, deren Volumen von der Auslenkung des Verschiebeelements aus seiner Ruhelage entlang des Verschiebewegs abhängt.

Die Erfindung betrifft ferner einen Hydraulikdämpfer zur Dämpfung von Schwingungen in Bauwerken. Wie zu den herkömmlichen Hydraulikdämpfern erläutert, eignet sich ein Hydraulikdämpfer, auf den sich die Erfindung bezieht, zum Dämpfen von Krafteinflüssen zwischen zwei Bauelementen, zwischen die der Hydraulikdämpfer montiert ist. Der Hydraulikdämpfer gemäß der Erfindung umfasst eine mit einer hydraulischen Flüssigkeit gefüllte Arbeitskammer, in der ein Kolben verschiebbar angeordnet ist, der die Arbeitskammer in zwei Teilkammern, nämlich eine erste und eine zweite Teilkammer, unterteilt. Der Hydraulikdämpfer umfasst zumindest ein Ventil zum wechselweisen Zulassen und Sperren eines Fluidstroms zwischen den Teilkammern zum Gewährleisten eines Druckausgleichs zwischen den Teilkammern. Vorzugsweise umfasst der Hydraulikdämpfer zumindest zwei Ventile, wobei ein erstes Ventil zum Zulassen und Sperren eines Fluidstroms von der ersten Teilkammer zur zweiten Teilkammer ausgebildet ist und ein zweites Ventil zum Zulassen und Sperren eines Fluidstroms von der zweiten Teilkammer zur ersten Teilkammer ausgebildet ist, wobei die beiden Ventile jeweils einen Fluidstrom zwischen den Teilkammern in nur einer Richtung zulassen und in der entgegengesetzten Richtung stets sperren. Das Ventil kann beispielsweise in dem Kolben angeordnet sein. Beispielsweise kann das Ventil jedoch auch in einer Seitenwand der Arbeitskammer oder in der Kolbenstange angeordnet sein. Beispielsweise kann das Ventil in einem extern außerhalb der Arbeitskammer angeordneten Ventilgehäuse angeordnet sein, das die beiden Teilkammern verbindet. Beispielsweise kann der Hydraulikdämpfer so ausgebildet sein, dass die Arbeitskammer mit einem ersten Bauelement und der Kolben mit einem zweiten Bauelement verbindbar sind zum Dämpfen von Krafteinflüssen, die zwischen den beiden Bauelementen wirken. Bei einem entsprechenden Krafteinfluss zwischen den Bauelementen kann dann der Hydraulikdämpfer die Kraft abdämpfen, indem der Kolben in der Arbeitskammer entlang eines Kolbenwegs verschoben wird, wodurch sich das Volumenverhältnis zwischen den Volumina der beiden Teilkammern ändert. Beispielsweise kann an dem Kolben ein Kammmerbypass vorgesehen sein, über den die Teilkammern miteinander in Verbindung stehen, so dass zu jeder Zeit ein Fluidstrom mit einem geringen Strömungsquerschnitt zwischen den beiden Teilkammern fließen kann. Beispielsweise kann das Ventil so ausgebildet sein, dass es nur dann einen Fluidstrom zulässt, wenn ein Druckunterschied zwischen den Drücken, die in den beiden Teilkammern vorliegen, einen Mindestbetrag übersteigt. Beispielsweise kann der Hydraulikdämpfer ein erfindungsgemäßes Ventil aufweisen.

In einer Ausführungsform weist der erfindungsgemäße Hydraulikdämpfer eine Kolbenstange auf, an der der Kolben angeordnet ist, wobei die Kolbenstange mit ihrer axialen Erstreckung durch die Arbeitskammer verläuft und sich in jeder Position über die Arbeitskammer hinaus in einer Ausgleichskammer erstreckt, die axial in Reihe hinter der Arbeitskammer angeordnet ist und über einen Kanal mit der Arbeitskammer verbunden ist. Zumindest eine Begrenzungswand der Ausgleichskammer ist als ein Trennelement ausgebildet, über das die Ausgleichskammer von einem Gasdruckraum getrennt ist, der an der Ausgleichskammer angeordnet ist, wobei das Trennelement ausgebildet ist zum Gewährleisten einer Variation des Volumenverhältnisses zwischen einem Volumen der Ausgleichskammer und einem Volumen des Gasdruckraums. Die axiale Erstreckung der Kolbenstange gibt dabei gleichzeitig die Richtung vor, in der die Ausgleichskammer benachbart zur Arbeitskammer angeordnet ist. Der Kanal zwischen Ausgleichskammer und Arbeitskammer kann beispielsweise als Bypass mit einem geringen Strömungsquerschnitt vorgesehen sein, beispielsweise kann in dem Kanal auch ein Ventil vorgesehen sein. Dadurch, dass der Gasdruckraum über ein Trennelement an der Ausgleichskammer angeordnet ist, das zum Gewährleisten einer Variation des Volumenverhältnisses zwischen den Volumina von Ausgleichskammer und Gasdruckraum ausgebildet ist, kann das Volumen des Gasdruckraums verringert werden, wenn das Volumen der hydraulischen Flüssigkeit oder das Volumen der Kolbenstange, das sich in der Ausgleichskammer befindet, zunimmt. Hierzu kann das Trennelement beispielsweise verschiebbar ausgebildet sein. Beispielsweise kann die Ausgleichskammer nach Art eines Hohlzylinders ausgebildet sein oder einen hohlzylinderartigen Fortsatz in Richtung zum Gasdruckraum aufweisen, wobei das Trennelement in dem entsprechenden Hohlzylinder angeordnet sein kann und in dem Hohlzylinder verschiebbar sein kann, so dass eine entsprechende Variation des Volumenverhältnisses ermöglicht ist. Beispielsweise kann das Trennelement elastisch ausgebildet sein, beispielsweise als elastische Membran, die zwischen Ausgleichskammer und Gasdruckraum vorgesehen ist, wodurch die Variation des Volumenverhältnisses gewährleistet oder unterstützt sein kann.

Durch das axial hintereinander Anordnen von Ausgleichskammer und Arbeitskammer kann sichergestellt sein, dass jede Bewegung der Kolbenstange, und damit jede Bewegung des Kolbens, der fest mit der Kolbenstange verbunden ist, unmittelbar eine Veränderung des Volumens der Kolbenstange mit sich bringt, das in der Ausgleichskammer angeordnet ist. Die Kolbenstange kann dabei so in der Ausgleichskammer angeordnet sein, dass sie unmittelbar von der hydraulischen Flüssigkeit umgeben ist. In jedem Fall kann die Kolbenstange in der Ausgleichskammer so angeordnet sein, dass die Änderung des Volumens der Kolbenstange, das in der Ausgleichskammer angeordnet ist, bei - theoretisch angenommen - gleichbleibendem Volumen an hydraulischer Flüssigkeit, die in der Ausgleichskammer angeordnet ist, unmittelbar eine Erhöhung des Drucks in der Ausgleichskammer mit sich bringt. Dadurch kann die Bewegung der Kolbenstange als solche eine Verschiebung des Trennelements mit sich bringen, unabhängig von der Tatsache, ob die Verschiebung der Kolbenstange über die gleichzeitige Verschiebung des Kolbens gleichzeitig eine Veränderung des Volumens der Flüssigkeit herbeiführt, die in der Ausgleichskammer angeordnet ist.

Die beschriebene Ausführungsform des erfindungsgemäßen Hydraulikdämpfers bringt erhebliche Vorteile mit sich. Durch das Vorsehen der Ausgleichskammer kann einer Druckveränderung in der Arbeitskammer durch Ausdehnung der hydraulischen Flüssigkeit in der Arbeitskammer bei einer Variation der Temperatur effektiv entgegengewirkt werden. Durch das Vorsehen eines Gasdruckraums, der über das Trennelement von der Ausgleichskammer getrennt ist, kann eine Drucksteigerung in der Arbeitskammer bei einer Temperaturerhöhung durch das kompressible Gas in dem Gasdruckraum abgepuffert werden. Darüber hinaus kann durch das Anordnen des Gasdruckraums benachbart zur Ausgleichskammer und außerhalb der Arbeitskammer sichergestellt sein, dass der Gasdruckraum von außen leicht zugänglich ist, so dass der Druck in dem Gasdruckraum kontrolliert werden kann und bei Bedarf korrigiert werden kann oder bei Bedarf das Gas getauscht oder neues Gas eingeführt werden kann. Darüber hinaus ist durch die Ausgestaltung der erfindungsgemäßen Ausführungsform sichergestellt, dass bei einer Auslenkung des Hydraulikdämpfers aus seiner stationären Lage eine Rückstellkraft auf den Hydraulikdämpfer wirkt, die auf eine Rückstellung des Hydraulikdämpfers in seine stationäre Lage hinwirkt. Hierzu trägt insbesondere bei, dass ein Verschieben der Kolbenstange unmittelbar eine Variation des Volumens der Kolbenstange mit sich bringt, das in der Ausgleichskammer angeordnet ist, und damit unmittelbar eine Veränderung des Drucks in dem Gasdruckraum herbeiführt. Dadurch übt das Gas in dem Gasdruckraum eine entsprechende Rückstellkraft auf den Hydraulikdämpfer aus. Die Rückstellkraft wird somit nicht nur durch eine Veränderung des Volumens der hydraulischen Flüssigkeit in der Ausgleichskammer sondern auch durch eine Veränderung des Volumens der Kolbenstange, das sich in der Ausgleichskammer befindet, bewirkt.

Vorzugsweise ist der Gasdruckraum axial in Reihe hinter der Ausgleichskammer angeordnet, wobei sich die Kolbenstange insbesondere zumindest in einen Positionsbereich in den Gasdruckraum erstreckt. Die Kolbenstange kann sich beispielsweise in jeder möglichen Position des Kolbens entlang des Kolbenwegs innerhalb der Arbeitskammer in den Gasdruckraum erstrecken. Der Hydraulikdämpfer kann jedoch auch so ausgebildet sein, dass sich die Kolbenstange in einigen Positionen des Kolbens entlang des Kolbenwegs nur in die Arbeitskammer und die Ausgleichskammer erstreckt und in anderen Positionen des Kolbens entlang des Kolbenwegs zusätzlich in den Gasdruckraum erstreckt. Durch die erfindungsgemäße Ausführungsform kann sichergestellt sein, dass zumindest in einem Positionsbereich der Kolbenstange bzw. des Kolbens eine Veränderung der Position der Kolbenstange unmittelbar eine Veränderung des Volumens der Kolbenstange bewirkt, das in dem Gasdruckraum angeordnet ist, so dass die Verschiebung der Kolbenstange selbst einen Einfluss auf die auf den Hydraulikdämpfer wirkende Rückstellkraft haben kann.

In einer Ausführungsform ist die Kolbenstange so in dem Hydraulikdämpfer angeordnet, dass jede Veränderung der Position der Kolbenstange eine Veränderung des Volumens der Kolbenstange bewirkt, das in dem Gasdruckraum oder der Ausgleichskammer angeordnet ist, wobei jede Veränderung dieses Volumens der Kolbenstange unmittelbar zur Veränderung des Druckverhältnisses zwischen dem Druck in der Ausgleichskammer und dem Druck in dem Gasdruckraum beiträgt. Beispielsweise kann die Kolbenstange in dem Hydraulikdämpfer so angeordnet sein, dass sie sich in einem Positionsbereich des Kolbens entlang des Kolbenwegs immer vollkommen durch die Ausgleichskammer hindurch in den Gasdruckraum erstreckt, so dass eine Veränderung der Position der Kolbenstange in diesem Positionsbereich keine unmittelbare Veränderung des Volumens der Kolbenstange herbeiführt, das in der Ausgleichskammer angeordnet ist, sondern nur eine Veränderung des Volumens der Kolbenstange, das in dem Gasdruckraum angeordnet ist. Beispielsweise kann die Kolbenstange in dem Hydraulikdämpfer so angeordnet sein, dass in einem Positionsbereich die Kolbenstange sich in die Arbeitskammer so erstreckt, dass jede Veränderung der Position der Kolbenstange in diesem Positionsbereich eine unmittelbare Veränderung des Volumens der Kolbenstange, das in der Arbeitskammer angeordnet ist, mit sich bringt, wohingegen das Volumen der Kolbenstange, das in dem Gasdruckraum angeordnet ist, sich bei einer Veränderung der Position der Kolbenstange in diesem Positionsbereich nicht verändert. Durch die erfindungsgemäße Ausführungsform kann besonders zuverlässig gewährleistet sein, dass die Veränderung der Position der Kolbenstange zum Erzeugen einer Rückstellkraft auf den Hydraulikdämpfer beiträgt.

Die Erfindung wird im Folgenden anhand von Ausführungsbeispielen unter Bezugnahme auf sechs Figuren näher erläutert. Es zeigen:
- Figur 1a:: eine schematische Schnittdarstellung einer ersten Ausführungsform des erfindungsgemäßen Ventils;
- Figur 1b:: eine schematische Schnittdarstellung einer Abwandlung der ersten Ausführungsform;
- Figur 2:: eine schematische Schnittdarstellung einer zweiten Ausführungsform des erfindungsgemäßen Ventils;
- Figur 3a:: eine schematische Schnittdarstellung einer dritten Ausführungsform des erfindungsgemäßen Ventils;
- Figur 3b:: eine schematische Schnittdarstellung eines Ausschnitts einer Abwandlung der dritten Ausführungsform des erfindungsgemäßen Ventils;
- Figur 4:: eine schematische Schnittdarstellung einer vierten Ausführungsform des erfindungsgemäßen Ventils;
- Figur 5:: eine schematische Schnittdarstellung einer fünften Ausführungsform des erfindungsgemäßen Ventils;
- Figur 6:: eine schematische Schnittdartellung einer Ausführungsform des erfindungsgemäßen Hydraulikdämpfers.

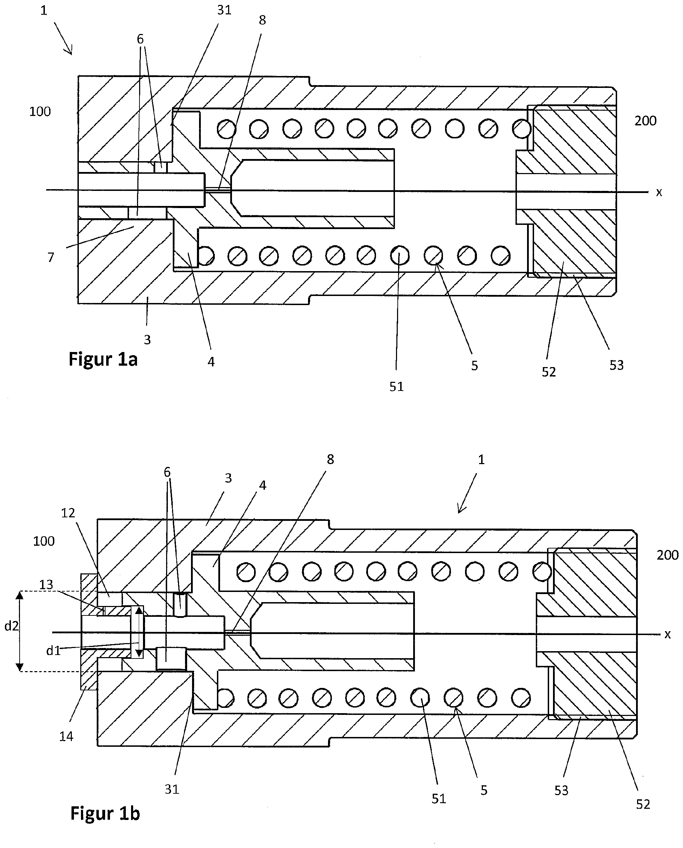

In Figur 1a ist eine Ausführunsgform eines erfindungsgemäßen Ventils 1 in einer schematischen Schnittdarstellung dargestellt. In Figur 1a ist das Ventil 1 in seiner Ruhelage dargestellt. Das Ventil 1 weist ein Aufnahmeelement 3 sowie ein Verschiebeelement 4 auf. Das Aufnahmeelement 3 weist einen Zylinderabschnitt auf, der als Hohlzylinder ausgebildet ist, der einen geschlossenen Zylindermantelabschnitt 7 aufweist. In diesem Zylinderabschnitt des Aufnahmeelements 3 ist ein Abschnitt des Verschiebeelements 4 angeordnet, der seinerseits als Hohlzylinder ausgebildet ist und in seinem Zylindermantel Durchführungen 6 aufweist. Der als Hohlzylinder ausgebildete Abschnitt des Verschiebeelements 4 ist in Spielpassung in dem genannten Hohlzylinderabschnitt des Aufnahmeelements 3 angeordnet. Über die beiden Abschnitte sind das Verschiebeelement 4 und das Aufnahmeelement 3 zueinander geführt, wobei zwischen dem Verschiebeelement 4 und dem Aufnahmeelement 3 ein solches Spiel vorgesehen ist, das eine hydraulische Flüssigkeit in geringen Mengen zwischen Verschiebeelement 4 und Aufnahmeelement 3 gelangen kann, so dass eine Schmierung der beiden Elemente gegeneinander erfolgen kann.

Aus Figur 1a ist ersichtlich, dass sich der Durchmesser des Verschiebeelements 4, der in einigen Ausführungsformen, wie auch in der Ausführungsform gemäß Figur 1a, mit dem Querschnitt des Verschiebeelements 4 senkrecht zu der Verschieberichtung gleichgesetzt werden kann, stufenförmig verändert. Dabei nimmt der Querschnitt des Verschiebeelements 4 über die Stufe von seiner Belastungsseite zu seiner Gegenseite hin stufenförmig zu. Das Aufnahmeelement 3 weist eine korrespondierende stufenförmige Ausgestaltung auf, so dass das Aufnahmeelement 3 einen Anschlag 31 für das Verschiebeelement 4 bildet, an dem das Verschiebeelement 4 in der Ruhelage anliegt. Die korrespondierende stufenförmige Ausgestaltung von Aufnahmeelement 3 und Verschiebeelement 4 zum Bilden eines Anschlags 31 für das Verschiebeelement 4 durch das Aufnahmeelement 3 kann für ein erfindungsgemäßes Ventil allgemein vorteilhaft sein.

In der Ruhelage wird das Verschiebeelement 4 durch eine Federeinrichtung 5 gegen den Anschlag des Aufnahmeelements 3 gepresst. Die Federeinrichtung 5 umfasst ein Federelement 51 sowie ein Stützelement 52 und eine Einstelleinrichtung 53. Die Einstelleinrichtung 53 ist als ein Gewinde zwischen Stützelement 52 und Aufnahmeelement 3 ausgebildet. Darüber lässt sich die Federkraft, mit der die Federeinrichtung 5 auf das Verschiebeelement 4 wirkt, über die Einstelleinrichtung 53 einstellen. Dabei ist das Federelement 51 stets über das Stützelement 52 mit dem Aufnahmeelement 3 verbunden. Über die Federkraft ist die Rückstellkraft einstellbar, die die Federeinrichtung 5 auf das Verschiebeelement 4 in der Ruhelage und bei einer Auslenkung aus seiner Ruhelage ausübt.

In der dargestellten Ruhelage liegen die Durchführungen 6 des Verschiebeelements 4 dem geschlossenen Zylindermantelabschnitt 7 des Aufnahmeelements 3 gegenüber, so dass das Ventil 1 in der Ruhelage keinen Durchlasskanal aufweist. Denn ein Durchfluss von der ersten Seite 100 zu der zweiten Seite 200 durch die Durchführungen 6 ist durch den geschlossenen Zylindermantelabschnitt 7 wirksam verhindert. Dagegen weist das Ventil 1 einen Bypass 8 auf, über den die beiden Seiten 100, 200 des Ventils 1 ununterbrochen miteinander verbunden sind, so dass ein geringfügiger Druckunterschied, der sich an den beiden Seiten 100, 200 bilden kann, über den Bypass 8 ausgeglichen werden kann.

Bei einer Druckbeaufschlagung des Ventils 1 von seiner ersten Seite 100 aus, die größer ist als die Druckbeaufschlagung in der Ruhelage, erfährt das Verschiebeelement 4 an seiner Belastungsseite, die zu der ersten Seite 100 zugewandt ist, eine Verschiebekraft zur zweiten Seite 200 hin. Sobald die Verschiebekraft die Rückstellkraft übersteigt, wird das Ventil 1 und damit das Verschiebeelement 4 aus seiner Ruhelage ausgelenkt, wobei sich das Verschiebeelement 4 in der Verschieberichtung x bewegt, die in dem dargestellten Ausführungsbeispiel mit der Achse des als Hohlzylinder ausgebildeten Zylinderabschnitts mit den Durchführungen 6 des Verschiebeelements 4 und mit der Achse des als Hohlzylinder ausgebildeten Zylinderabschnitts mit dem geschlossenen Zylindermantelabschnitts 7 des Aufnahmeelements 3 zusammenfällt. Sobald das Verschiebeelement 4 so weit aus seiner Ruhelage ausgelenkt ist, dass zumindest eine der Durchführungen 6 in der Verschieberichtung x neben dem geschlossenen Zylindermantelabschnitt 7 angeordnet ist, weist das Ventil 1 einen Durchlasskanal auf, der durch die entsprechende Durchführung 6 bzw. die entsprechenden Durchführungen 6 verläuft und dessen Durchlassquerschnitt durch den Querschnitt der entsprechenden Durchführungen 6 und - je nach Auslenkung des Verschiebeelements 4 - möglicherweise auch durch den geschlossenen Zylindermantelabschnitt 7 beschränkt ist, der - je nach Auslenkung des Ventils 1 aus seiner Ruhelage - einen Teil des Querschnitts von zumindest einer der Durchführungen 6 bedecken kann.

Aus Figur 1 ist ersichtlich, dass das erfindungsgemäße Ventil 1 mehrere Durchführungen 6 aufweist, die mit ihren Mittelpunkten in der Verschieberichtung x zueinander versetzt sind und die sich in ihren Querschnitten unterscheiden. Je nachdem, wie weit das Ventil 1 und damit das Verschiebeelement 4 aus seiner Ruhelage ausgelenkt ist, verändert sich somit der Durchlassquerschnitt des Durchlasskanals. Damit ist über die Auslenkung des Ventils 1 aus seiner Ruhelage der Durchlassquerschnitt des Durchlasskanals einstellbar.

In Figur 1b ist ein Querschnitt einer Ausführungsform eines erfindungsgemäßen Ventils 1 analog zu Figur 1a schematisch dargestellt. Die Ausführungsform gemäß Figur 1b entspricht im Wesentlichen der Ausführungsform gemäß Figur 1a, wobei jedoch die Ausführungsform gemäß Figur 1b dergestalt abgewandelt wurde, dass sie ein Verschlusselement 14 sowie eine Dämpungskammer 12 und einen Dämpfungsbypass 13 aufweist. Darüber hinaus ist die effektive Fläche, über die das Verschiebeelement 4 von der ersten Seite 100 aus an seiner Belastungsseite durch ein Fluid durch Druck beaufschlagbar ist, anders eingestellt als bei dem Ausführungsbeispiel gemäß Figur 1a.

Das Verschlusselement 14 ist von dem Aufnahmeelement 3 umfasst, wobei das Aufnahmeelement 3 umfassend das Verschlusselement 14 eine in sich stabile Einheit bildet. Damit weist das Aufnahmeelement 3 eine abgestufte Form bildende Abstufung aus, die mit einer korrespondierenden abgestuften Form, die Abstufungen in dem Verschiebeelement 4 bilden, korrespondiert. Zwischen den Abstufungen von Verschiebeelement 4 und Aufnahmeelement 3 ist die Dämpfungskammer 12 ausgebildet. Die Dämpfungskammer 12 ist über einen Dämpfungsbypass 13 jederzeit mit der ersten Seite 100 fluidführend verbunden, so dass bei einer Verbindung des Ventils 1 an seiner ersten Seite 100 mit einer ersten Teilkammer die Dämpfungskammer 12 mit der ersten Teilkammer permanent in Verbindung steht. Bei einer Auslenkung des Verschiebeelements 4 aus seiner in Figur 1b dargestellten Ruhelage kann somit ein Fluid durch den Dämpfungsbypass 13 von der ersten Seite 100 aus in die Dämpfungskammer 12 gelangen. Wenn kein Fluid in die Dämpfungskammer 12 gelangt, ist die Auslenkung des Verschiebelements 4 aus seiner Ruhelage weitestgehend verhindert. Über den kleinen Dämpfungsbypass 13, mit dem die Dämpfungskammer 12 mit der ersten Seite 100 in Verbindung steht, ist eine zusätzliche Dämpfung des Ventils 1 gewährleistet, die insbesondere bei dem Einsatz des Ventils 1 in einem erfindungsgemäßen Hydraulikdämpfer vorteilhaft sein kann. Aus Figur 1b ist ersichtlich, dass das Volumen der Dämpfungskammer 12 von der Position des Verschiebeelements 4 entlang des Verschiebewegs in der Verschieberichtung x abhängt.

Ferner ist aus Figur 1b erkennbar, dass der Durchmesser d2 des Zylinderabschnitts des Verschiebeelements 4, in dem die Durchführungen 6 angeordnet sind, erheblich größer ist als der Durchmesser d1, der die effektive Fläche bestimmt, über die das Verschiebeelement 4 an seiner Belastungsseite von der ersten Seite 100 aus durch ein Fluid mit Druck beaufschlagbar ist zum Erzeugen einer Verschiebekraft auf das Verschiebeelement 4. Entsprechend ist das Ventil 1 gemäß der in Figur 1b dargestellten Ausführungsform so ausgebildet, dass die effektive Verschiebekraft, die bei einer Druckbeaufschlagung von der ersten Seite 100 aus auf das Verschiebeelement 4 wirkt, bei einem bestimmten Druck, der an der ersten Seite 100 des Ventils 1 anliegt, relativ geringgehalten werden kann, während der Durchlassquerschnitt durch die Anordnung der Durchführungen 6 in einem Zylinderabschnitt mit einem großen Durchmesser d2 bei einer entsprechenden Auslenkung des Ventils 1 aus seiner Ruhelage groß sein kann.

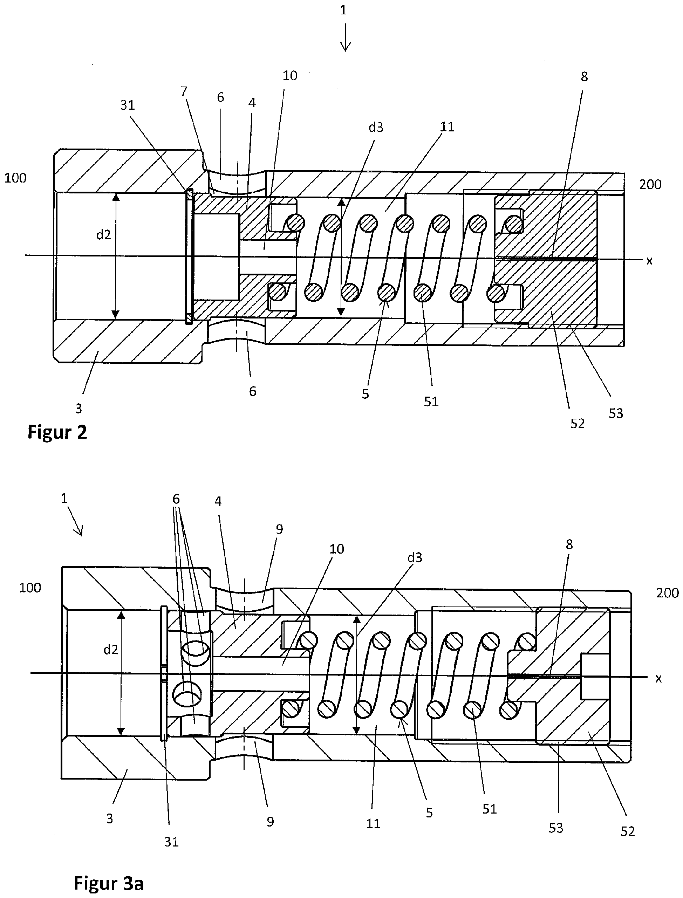

In Figur 2 ist eine weitere Ausführungsform des erfindungsgemäßen Ventils 1 schematisch dargestellt. Das Ventil 1 umfasst ein Aufnahmeelement 3, das einen hohlzylinderförmigen Abschnitt aufweist, der in seinem Zylindermantel Durchführungen 6 aufweist. In der Ruhelage des Ventils 1, die in Figur 2 dargestellt ist, weist das Ventil 1 keinen Durchlasskanal auf, sondern ist zum Sperren eines Fluidstroms zwischen seinen beiden Seiten 100, 200 ausgebildet. Hierzu liegt ein geschlossener Zylindermantelabschnitt 7, den das Verschiebeelement 4 aufweist, in der Ruhelage den Durchführungen 6 gegenüber. Allerdings liegt der geschlossene Zylindermantelabschnitt 7 in der Ruhelage nicht vollständig an den Umrandungen der Durchführungen 6 an, da sowohl das Aufnahmeelement 3 als auch das Verschiebeelement 4 Abstufungen aufweisen, durch die sich der Durchmesser des Verschiebeelements 4 von dem Durchmesser d2 auf den Durchmesser d3 entlang der Verschieberichtung x verringert und entsprechend der Innendurchmesser des hohlzylinderartig ausgestalteten Aufnahmeelements 3 von d2 auf d3 reduziert ist.

Die Federeinrichtung 5 ist analog zu den Federeinrichtungen 5 gemäß den in den Figuren 1a und 1b dargestellten Ausführungsbeispielen ausgebildet und weist entsprechend ein Federelement 51 sowie ein Stützelement 52 und eine Einstelleinrichtung 53 auf. In der Ruhelage ist das Verschiebeelement 4 durch die Federeinrichtung 5 gegen einen Anschlag 31 gepresst, der von dem Aufnahmeelement 3 umfasst ist und ringförmig ausgebildet ist. Bei einer Druckbeaufschlagung des Verschiebeelements 4 von der ersten Seite 100 aus dergestalt, dass eine effektive Verschiebekraft auf das Verschiebeelement 4 wirkt, die die durch die Federeinrichtung 5 auf das Verschiebeelement 4 ausgeübte Rückstellkraft übersteigt, wird das Ventil 1 und damit das Verschiebeelement 4 aus seiner Ruhelage ausgelenkt, wodurch das Verschiebeelement 4 von seiner Ruhelage weg in die Verschieberichtung x verschoben wird. Sobald die Durchführungen 6 bei einer Verschiebung des Verschiebeelements 4 in der Verschieberichtung x zumindest teilweise benachbart zu dem geschlossenen Zylindermantelabschnitt 7 des Verschiebeelements 4 angeordnet sind, weist das Ventil 1 einen Durchlasskanal auf, dessen Durchlassquerschnitt mit zunehmender Auslenkung in der Verschieberichtung x solange zunimmt, bis der geschlossene Zylindermantelabschnitt 7 die Durchführungen 6 sämtlich vollständig freigibt. Bei dem in der Figur 2 dargestellten Ausführungsbeispiel weist das Stützelement 52 einen Bypass 8 auf, über den die beiden Seiten 100, 200 des Ventils 1 permanent fluidführend verbunden sind.

Das Verschiebeelement 4 weist ferner einen Fluidkanal 10 auf, der die Belastungsseite des Verschiebeelements 4 mit der Gegenseite des Verschiebeelements 4 verbindet. An der Gegenseite des Verschiebeelements 4 ist eine Gegendruckkammer 11 in dem Aufnahmeelement 3 angeordnet. Bei einer Druckbeaufschlagung des Ventils 1 von seiner ersten Seite 100 aus kann ein Fluid durch den Fluidkanal 10 in die Gegendruckkammer 11 gelangen und von dort aus einen Druck auf das Verschiebeelement 4 entgegen der Verschieberichtung x ausüben. Die effektive Fläche, über die das Verschiebeelement 4 somit durch ein Fluid von der ersten Seite 100 aus mit Druck beaufschlagbar ist zum Erzeugen einer Verschiebekraft auf das Verschiebeelement 4 in der Verschieberichtung x ist somit aus der Differenz der Querschnitte zu ermitteln, die durch die Durchmesser d2 und d3 aufgespannt sind. Dadurch kann die Verschiebekraft, selbst bei dem Anliegen eines sehr hohen Drucks auf das Ventil 1 von der ersten Seite 100 aus, geringgehalten werden, so dass einfache und kostengünstige Federeinrichtungen 5 für das erfindungsgemäße Ventil 1 in der dargestellten Ausführungsform eingesetzt werden können.

In Figur 3a ist eine Abwandlung der Ausführungsform, die in Figur 2 dargestellt ist, schematisch gezeigt. Die Ausführungsform gemäß Figur 3a unterscheidet sich von der Ausführungsform gemäß Figur 2 im Wesentlichen dadurch, dass das Verschiebeelement 4 einen Zylinderabschnitt aufweist, in dem Durchführungen 6 angeordnet sind, wobei das Aufnahmeelement 3 Durchlassöffnungen 9 aufweist. In der in Figur 3a dargestellten Ruhelage ist ein Fluidstrom zwischen den beiden Seiten 100, 200 des Ventils 1 durch das Ventil 1 gesperrt. Lediglich durch den Bypass 8 kann ein geringer Anteil an Fluid zwischen den beiden Seiten 100, 200 fließen. Bei einer Auslenkung des Ventils 1 aus seiner Ruhelage, und damit bei einer Auslenkung des Verschiebeelements 4 aus seiner Ruhelage von dem Anschlag 31 weg, entsteht ein Durchlasskanal in dem Ventil 1, sobald sich die Querschnittsflächen von zumindest einigen der Durchführungen 6 mit den Querschnittsflächen von zumindest einigen der Durchlassöffnungen 9 überschneiden. Wie bereits erläutert ist durch das Vorsehen von Durchlassöffnungen 9 und Durchführungen 6 eine besonders gute Einstellbarkeit des Durchlassquerschnitts in Abhängigkeit von der Auslenkung des Ventils 1 möglich. Zu der guten Einstellbarkeit des Durchlassquerschnitts trägt bei dem Ausführungsbeispiel gemäß Figur 3a auch bei, dass die Durchführungen 6 zumindest teilweise mit ihren Mittelpunkten in der Verschieberichtung x versetzt zueinander angeordnet sind. Damit ist die Anzahl der Durchführungen 6, deren Querschnitt dem Querschnitt der Durchlassöffnungen 9 gegenüber angeordnet gebracht werden kann, mit der Auslenkung des Verschiebeelements 4 variierbar. Dadurch ist auch die gemeinsame Querschnittsfläche der Durchführungen 6, durch die der Durchlasskanal verläuft, mit zunehmender Auslenkung ausgehend von der Ruhelage vergrößerbar.

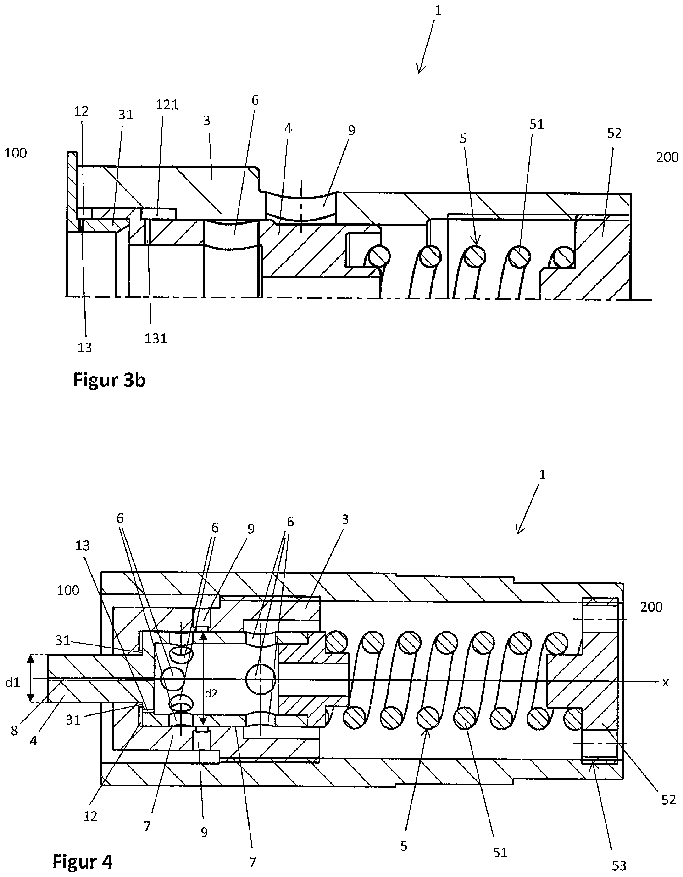

In Figur 3b ist ein Ausschnitt eines Ausführungsbeispiels eines erfindungsgemäßen Ventils 1 dargestellt, das einer Abwandlung des in Figur 3a dargestellten Ventils 1 entspricht. Im Gegensatz zu dem in Figur 3a dargestellten Ventil 1 weist das in Figur 3b dargestellte Ventil 1 eine Dämpfungskammer 12 sowie eine weitere Dämpfungskammer 121 auf, die jeweils über einen Dämpfungsbypass 13, 131 mit der ersten Seite 100 des Ventils 1 fluidführend in Verbindung stehen. Die Dämpfungskammern 12, 121 sind durch Abstufungen, die in dem Aufnahmeelement 3 und dem Verschiebeelement 4 angeordnet sind und miteinander korrespondieren, ausgebildet. Aus Figur 3b ist ersichtlich, dass sich das Volumen der Dämpfungskammern 12, 121 bei einer Verschiebung des Verschiebeelements 4 entlang der Verschieberichtung x verändert. Dabei nimmt ausgehend von der Ruhelage, die in Figur 3b dargetellt ist, das Volumen der Dämpfungskammer 12 mit zunehmender Auslenkung zu, während das Volumen der Dämpfungskamer 121 mit zunehmender Auslenkung abnimmt. In jedem Fall bewirken jedoch beide Dämpfungskammern 12, 121 mit den ihr zugeordneten Dämpfungsbypässen 13, 131 eine zusätzliche Dämpfung des in Figur 3b dargestellten Ventils 1, da die Bypässe 13, 131 einen Fluidfluss in die Dämpfungskammern 12, 121 und aus den Dämpfungskammern 12, 121 begrenzen, so dass die Verschiebung des Verschiebeelements 4 relativ zu dem Aufnahmeelement 3, für die eine Veränderung des Volumens der Dämpfungskammern 12, 121 und damit ein Fluidfluss durch die Dämpfungsbypässe 13, 131 erforderlich ist, gedämpft ist.

In Figur 4 ist ein weiteres Ausführungsbeispiel eines erfindungsgemäßen Ventils 1 dargestellt. Das Ausführungsbeispiel gemäß Figur 4 weist ebenfalls ein Verschiebeelement 4 und ein Aufnahmeelement 3 auf sowie eine Federeinrichtung 5, die ein Federelement 51, ein Stützelement 52 und eine Einstelleinrichtung 53 umfasst. Das Aufnahmeelement 4 weist einen Bypass 8 auf, der die Belastungsseite mit der Gegenseite des Verschiebeelements 4 verbindet, so dass auch bei einem sehr geringen Druckunterschied an den Seiten 100, 200 ein geringer Fluidfluss zwischen den beiden Seiten 100, 200 des Ventils 1 ermöglicht ist. Das Verschiebeelement 4 weist an seiner Belastungsseite einen Durchmesser d1 auf, über den eine effektive Fläche aufgespannt ist, mit der das Verschiebeelement 4 von seiner Belastungsseite und damit von der ersten Seite 100 aus durch ein Fluid mit Druck beaufschlagbar ist. Darüber hinaus weist das Verschiebeelement 4 einen Zylinderabschnitt auf, der als Hohlzylinder ausgebildet ist. In diesem Zylinderabschnitt sind in dem Zylindermantel Durchführungen 6 vorgesehen. Dieser Zylinderabschnitt weist einen Durchmesser d2 auf, der erheblich größer als der Durchmesser d1 des Verschiebeelements 4 an seiner Belastungsseite ist. Die Variation zwischem dem Durchmesser d1 und d2 des Verschiebeelements 4 ist durch eine abgestufte Ausbildung des Verschiebeelements 4 realisiert. Durch die abgestufte Ausbildung kann somit erreicht werden, dass selbst bei dem Anliegen eines großen Drucks an der ersten Seite 100, der auf das Verschiebeelement 4 wirkt, nur eine relativ geringe Kraft auf das Verschiebeelement 4 ausgeübt wird dank seiner geringen effektiven Fläche an der Belastungsseite, wohingegen ein großer Druchlassquerschnitt durch die Durchführungen 6 bei einer bestimmten Auslenkung des Ventils 1 gewährleistet sein kann, indem die Durchführungen 6 an einem Zylinderabschnitt angeordnet sind, der einen großen Durchmesser d2 aufweist.

In der in Figur 4 dargestellten Ruhelage ist das Verschiebeelement 4 durch die Federeinrichtung 5 gegen einen Anschlag 31 des Aufnahmeelements 3 gepresst. Sobald eine Verschiebekraft an der Belastungsseite auf das Verschiebeelement 4 wirkt, die die durch die Federeinrichtung 5 auf das Verschiebeelement 4 entgegen der Verschieberichtung x wirkende Rückstellkraft übersteigt, wird das Verschiebeelement 4 aus der Ruhelage ausgelenkt. Sobald das Verschiebeelement 4 so weit aus der Ruhelage ausgelenkt ist, dass der geschlossene Zylindermantelabschnitt 7 in Verschieberichtung x neben den Durchführungen 6 angeordnet ist, so dass zumindest einige der Durchführungen 6 mit ihrem Querschnitt den Querschnitt der Durchlassöffnungen 9 schneiden, die in einem Zylindermantelabschnitt des Aufnahmeelements 3 angeordnet sind, ist in dem Ventil 1 ein Durchlasskanal realisiert, durch den Fluid von der ersten Seite 100 zu der zweiten Seite 200 fließen kann.

Aus Figur 4 ist ferner ersichtlich, dass das Verschiebeelement 4 einen weiteren Zylinderabschnitt mit weiteren Durchführungen 6 aufweist. Über die Auslenkung des Verschiebeelements 4 aus seiner Ruhelage in Richtung des Verschiebewegs kann mit zunehmender Auslenkung der Fluidfluss durch den Durchlasskanal dadurch noch vergrößert werden, dass die weiteren Durchführungen 6 näher an die zweite Seite 200 gebracht werden, so dass ein Strömungswiderstand in dem Durchlasskanal verringert wird. Dies ist dadurch bedingt, dass den weiteren Durchführungen 6 ein weiterer geschlossener Zylinderabschnitt des Aufnahmeelements 3 gegenüberliegt, wobei bei einer Auslenkung des Verschiebeelements 4 aus seiner Ruhelage die Strecke verkürzt wird, die ein Fluid entlang des weiteren geschlossenen Zylinderabschnitts fließen muss, um von der ersten Seite 100 zu der zweiten Seite 200 zu gelangen. Darüber hinaus gewährleisten die weiteren Durchführungen 6, dass Fluid, das über die Durchführungen 6 von der ersten Teilkammer 100 in den Hohlzylinderabschnitt des Verschiebeelements 4 eingetreten ist, über einen großen Durchflussquerschnitt aus diesem Abschnitt des Verschiebeelements 4 zur zweiten Teilkammer 200 hin austreten kann, so dass eine Drosselung des Fluidstroms von der ersten Teilkammer 100 zur zweiten Teilkammer 200 ausschließlich über das Zusammenspiel zwischen Durchlassöffnungen 9 und Durchführungen 6 gewährleistet ist, das das Eintreten von Fluid aus der ersten Teilkammer 100 in das Verschiebeelement 4 regelt.

Das in Figur 4 dargestellte erfindungsgemäße Ventil 1 weist ferner eine Dämpfungskammer 12 sowie einen Dämpfungsbypass 13 auf. Die Ventilelemente 3, 4 weisen jeweils Abstufungen auf, so dass sie jeweils eine in Verschieberichtung abgestufte Form aufweisen. Die Abstufungen bilden zwischen sich die Dämpfungskammer 12 aus. Das Volumen der Dämpfungskammer 12 variiert somit bei einer Variation der Position des Verschiebeelements 4 entlang des Verschiebewegs. Der Dämpfungsbypass 13 ist als Bohrung in dem Verschiebeelement 4 ausgebildet, die die zweite Teilkammer 200 mit der Dämpfungskammer 12 verbindet. Da die Dämpfungskammer 12 ausschließlich über den Dämpfungsbypass 13 mit ihrer Umgebung fluidführend kommuniziert, ist ein Fluidfluss durch den Dämpfungsbypass 13 für eine Variation des Volumens der Dämpfungskammer 12 erforderlich. Aufgrund des geringen Querschnitts des Dämpfungsbypasses 13 ist somit das Dämpfungsverhalten des Ventils 1 noch weiter verbessert.

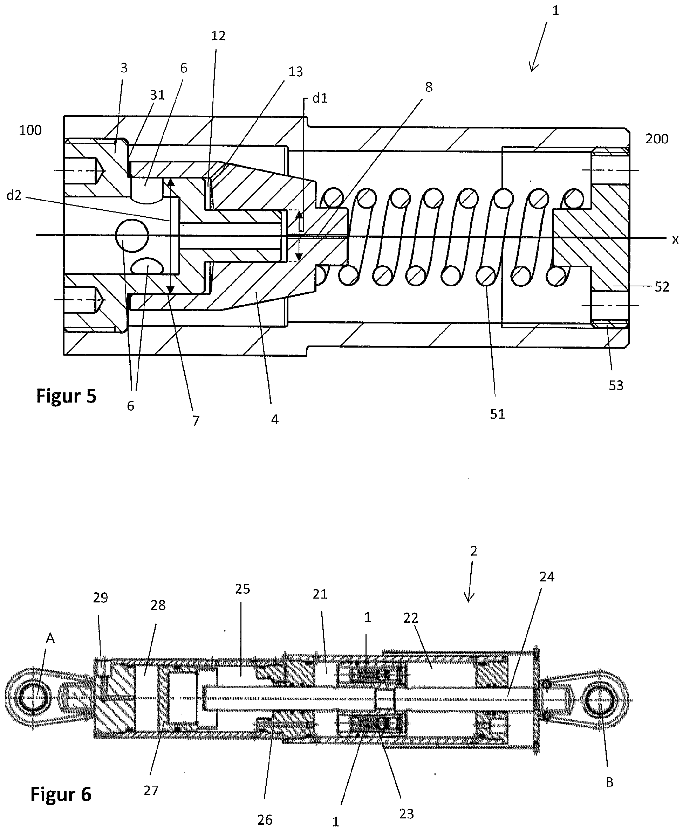

In Figur 5 ist eine weitere Ausführungsform eines erfindungsgemäßen Ventils 1 schematisch dargestellt. Das Ventil 1 umfasst ein Aufnahmeelement 3 sowie ein Verschiebeelement 4, die jeweils in der Verschieberichtung x abgestuft ausgebildet sind. Die in der Verschieberichtung x abgestufte Ausbildung bezieht sich allgemein darauf, dass eines der Ventilelemente 3, 4 an einer ersten Stelle einen ersten Querschnitt aufweist, der sich dann stufenartig verändert, so dass an einer zweiten Stelle entlang der Verschieberichtung x das Ventilelement einen zweiten Querschnitt aufweist. Das andere Ventilelement weist dann, wenn es eine mit der abgestuften Form des einen Ventilelements korrespondierende Form aufweist, eine Aussparung auf, die einen Querschnitt aufweist, der mit dem ersten Querschnitt des ersten Ventilelements korrespondiert, wobei das andere Ventilelement an einer weiteren Stelle, die in der Verschieberichtung x von der ersten Stelle entfernt ist, eine Aussparung mit einem zweiten Querschnitt aufweist, der mit dem zweiten Querschnitt des einen Ventilelements korrespondiert. Vorliegend weist das Aufnahmeelement 3 einen ersten Zylinderabschnitt auf, dessen Querschnitt durch den Durchmesser d1 aufgespannt ist, sowie in der Verschieberichtung x dazu versetzt einen zweiten Zylinderabschnitt, dessen Querschnitt durch den Durchmesser d2 aufgespannt ist, wobei der Durchmesser d2 erheblich größer als der Durchmesser d1 ist. Das Verschiebeelement 4 weist entsprechende holzylinderförmig ausgebildete erste und zweite Abschnitte auf, die einen Innendurchmesser aufweisen, der den Durchmessern d1 und d2 im Wesentlichen entspricht, so dass das Verschiebeelement 4 auf dem Aufnahmeelement 3 geführt ist.

In dem zweiten Zylinderabschnitt weist das Aufnahmeelement 3 Durchführungen 6 auf. In der Ruhelage liegen die Durchführungen 6 einem geschlossenen Zylindermantelabschnitt 7 gegenüber, den der zweite Zylinderabschnitt des Verschiebeelements 4 aufweist. In der Ruhelage, die in Figur 5 dargestellt ist, ist das Verschiebeelement 4 durch die Federeinrichtung 5 gegen einen Anschlag 31 des Aufnahmeelements 3 gepresst. Bei einer Auslenkung des Ventils 1 aus seiner Ruhelage ist das Verschiebeelement 4 aus seiner Ruhelage in der Verschieberichtung x entlang des Verschiebewegs auslenkbar, wodurch die Durchführungen 6 in der Verschieberichtung x zumindest teilweise benachbart zu dem geschlossenen Zylindermantelabschnitt 7 anordenbar sind. Entsprechend ist in dem Ventil 1 bei einer bestimmten Auslenkung des Ventils 1 aus seiner Ruhelage ein Durchlasskanal angeordnet, der durch zumindest einige der Durchführungen 6 verläuft.

Durch die abgestufte Ausbildung des Aufnahmeelements 3 sowie des Verschiebeelements 4 ist ferner gewährleistet, dass die Durchführungen 6 in einem Zylindermantelabschnitt 7 angeordnet sind, der einen großen Durchmesser aufweist, wohingegen gleichzeitig die effektive Fläche, mit der das Verschiebeelement 4 an seiner Belastungsseite von der ersten Seite 100 aus durch ein Fluid mit Druck beaufschlagbar ist, geringgehalten ist, so dass die Anforderungen an die Federeinrichtung 5 in Bezug auf die Höhe der Rückstellkraft, die die Federeinrichtung 5 auf das Verschiebeelement 4 zum hinreichenden Dämpfen des Ventils 1 ausüben muss, relativ geringgehalten werden können. Ferner weist das in Figur 5 dargestellte Ausführungsbeispiel des erfindungsgemäßen Ventils 1 eine Dämpfungskammer 12 auf, die über einen Dämpfungskanal 13 mit der zweiten Seite 200 dauerhaft fluidführend verbunden ist. Die Dämpfungskammer 12 ist zwischen die abgestufte Form bildenden Abstufungen von Aufnahmeelement 3 und Verschiebeelement 4 ausgebildet. Entsprechend verändert sich das Volumen der Dämpfungskammer 12 mit dem Maß der Auslenkung des Ventils 1 aus seiner Ruhelage.

In Figur 6 ist der Querschnitt eines Ausführungsbeispiels eines erfindungsgemäßen Hydraulikdämpfers 2 schematisch dargestellt. Der Hydraulikdämpfer 2 weist eine Arbeitskammer auf, die durch einen Kolben 23 in eine erste Teilkammer 21 und eine zweite Teilkammer 22 unterteilt ist. Der Kolben 23 ist an einer Kolbenstange 24 positionsfest montiert. Dies bedeutet, dass jede Verschiebung der Kolbenstange 24 eine entsprechende Verschiebung des Kolbens 23 in der Arbeitskammer mit sich bringt.

Das Volumenverhältnis der beiden Teilkammern 21, 22 zueinander verändert sich bei jeder Verschiebung des Kolbens 23 entlang des Kolbenwegs in der Arbeitskammer. Der Kolbenweg ist der Weg in der axialen Erstreckungsrichtung der Kolbenstange 24, innerhalb dessen der Kolben 23 in der Arbeitskammer bewegbar ist. In dem Kolben 23 sind zwei Ventile 1 angeordnet, die einen Fluidstrom zwischen den beiden Teilkammern 21, 22 nur dann zulassen, wenn der Druckunterschied zwischen den Teilkammern 21, 22 einen Mindestbetrag überschreitet. Ein erstes Ventil 1 ist zum Zulassen eines Fluidstroms von der ersten Teilkammer 21 zur zweiten Teilkammer 22 ausgebildet und sperrt jedweden Fluidstrom in der entgegengesetzten Richtung, ein zweites Ventil 1 ist zum Zulassen eines Fluidstroms von der zweiten Teilkammer 22 zur ersten Teilkammer 21 ausgebildet und sperrt jedweden Fluidstrom in der entgegengesetzten Richtung.

Mit dem Gehäuse der Arbeitskammer ist ein erstes Montageelement A verbunden, während mit der Kolbenstange 24 ein zweites Montageelement B verbunden ist. Der Hydraulikdämpfer 2 kann mit dem ersten Montageelement A an einem ersten Bauelement und mit dem zweiten Montageelement B an einem zweiten Bauelement fixiert werden zur Dämpfung von Kraftwirkungen zwischen den beiden Bauelementen. Bei einer Kraftbeaufschlagung auf die beiden Montageelemente A, B, mit der der Hydraulikdämpfer 2 komprimiert oder expandiert wird, erfolgt eine Verschiebung des Kolbens 23 innerhalb der Arbeitskammer. Dadurch wird das Fluid in einer der beiden Teilkammern 21, 22 komprimiert, so dass ein Druckunterschied zwischen den Drücken, die in den Teilkammern 21, 22 vorhanden sind, entsteht, wodurch zumindest eines der Ventile 1 öffnet und einen Fluidstrom zwischen den Teilkammern 21, 22 zulässt. Dadurch kann sich der Kolben 23 effektiv in der Arbeitskammer bewegen unter Änderung des Volumenverhältnisses der beiden Teilkammern 21, 22 zueinander. Durch die Bewegung des Kolbens 23 in der Arbeitskammer erfolgt eine Dämpfung der Krafteinwirkung auf die beiden Montageelemente A, B.

Axial in Reihe hinter der Arbeitskammer ist eine Ausgleichskammer 25 angeordnet. Die axiale Richtung ist durch die Erstreckungsrichtung der Kolbenstange 24 vorgegeben. Die Ausgleichskammer 25 ist durch einen Kanal 26 mit der Arbeitskammer verbunden. Der Kanal 26 weist einen geringen Querschnitt auf, so dass nur ein geringer Fluidstrom durch den Kanal 26 zwischen der Ausgleichskammer 25 und der Arbeitskammer ermöglicht ist. Der Kanal 26 verbindet dabei die Ausgleichskammer 25 mit der ersten Teilkammer 21 der Arbeitskammer. Axial in Reihe hinter der Ausgleichskammer 25 ist ein Gasdruckraum 28 angeordnet, der über ein Trennelement 27 von der Ausgleichskammer 25 getrennt ist. Das Trennelement 27 ist axial verschiebbar angeordnet, wobei sich durch die Verschiebung des Trennelements 27 das Volumenverhältnis zwischen dem Gasdruckraum 28 und der Ausgleichskammer 25 verändern lässt.

In dem in Figur 6 dargestellten Ausführungsbeispiel erstreckt sich die Kolbenstange 24 in jede Position des Kolbens 23 entlang des Kolbenwegs in die Ausgleichskammer 25. Dabei verursacht eine jede Verschiebung des Kolbens 23 entlang des Kolbenwegs eine Veränderung des Volumens der Kolbenstange 24, das in der Ausgleichskammer 25 angeordnet ist. Die Veränderung des Volumens der Kolbenstange 24, das in der Ausgleichskammer 25 angeordnet ist, verursacht dabei zwingend eine Veränderung des Volumenverhältnisses zwischen dem Gasdruckraum 28 und der Ausgleichskammer 25 (vorausgesetzt, der Hydraulikdämpfer 2 ist ein geschlossenes System ohne externe Einflüsse, beispielsweise auf den Gasdruckraum 28, was vorliegend der Fall ist). Beispielsweise wird bei einer Verschiebung des Kolbens 23 in der Arbeitskammer dergestalt, dass das Volumen der ersten Teilkammer 21 verringert wird und das Volumen der zweiten Teilkammer 22 entsprechend vergrößert wird, dass Volumen der Kolbenstange 24, das sich in der Ausgleichskammer 25 befindet, unmittelbar vergrößert, so dass das Trennelement 27 sich dergestalt verschiebt, dass sich das Volumen des Gasdruckraums 28 verringert und das Volumen der Ausgleichskammer 25 vergrößert. Dabei vergrößert sich der Druck in dem Gasdruckraum 28, wodurch eine Rückstellkraft auf die Kolbenstange 24 ausgeübt wird. Entsprechend ist der erfindungsgemäße Hydraulikdämpfer 2 durch die gestaffelte Anordnung von Arbeitskammer 24, Ausgleichskammer 25 und Gasdruckraum 28 sehr einfach aufgebaut und ermöglicht gleichzeitig die Realisierung einer Rückstellkraft auf die Kolbenstange 24 und damit den Kolben 23 bei einer Auslenkung des Hydraulikdämpfers 2 aus seiner stationären Lage, in die er über seine Montageelemente A, B gebracht wurde.

Bei dem erfindungsgemäßen Hydraulikdämpfer 2 ist ferner eine Zuleitung 29 vorgesehen, über die der Gasdruckraum 28 mit Gas befüllt werden kann und über die der Gasdruck in dem Gasdruckraum 28 kontrolliert werden kann. Beispielsweise kann dadurch auch einem zu hohen Überdruck in dem Gasdruckraum 28 effektiv vorgebeugt werden. Bei dem beschriebenen Ausführungsbeispiel ist die einfache Versorgung des Gasdruckraums 28 über die Zuleitung 29 gerade dadurch möglich, dass der Gasdruckraum 28 axial in Reihe hinter der Ausgleichskammer 25 angeordnet ist, die selbst wiederum axial in Reihe hinter der Arbeitskammer angeordnet ist.

Aus den beschriebenen Ausführungsformen des erfindungsgemäßen Ventils sowie des erfindungsgemäßen Hydraulikdämpfers lässt sich unzweifelhaft erkennen, dass das erfindungsgemäße Ventil und der erfindungsgemäße Hydraulikdämpfer einfach aufgebaut sind und erhebliche Vorteile im Vergleich zu herkömmlichen Ventilen bzw. Hydraulikdämpfern aufweisen. Die erfindungsgemäßen Ventile sind durch ihren einfachen Aufbau einfach und kostengünstig realisierbar und ermöglichen dabei die Realisierung eines Hydraulikdämpfers, der für eine Dämpfung von Krafteinwirkungen zwischen zwei Bauelementen in einem großen Funktionsbereich einsetzbar ist, da die Ventile in Abhängigkeit von der an dem Hydraulikdämpfer anliegenden Kraft einen Durchlasskanal mit unterschiedlichem Durchlassquerschnitt bereitstellen können, wobei der Durchlassquerschnitt beispielsweise mit zunehmender Kraft vergrößerbar ist. Entsprechend ist der erfindungsgemäße Hydraulikdämpfer besonders gut zum Dämpfen von Schwingungen in einem großen Funktionsbereich geeignet. Darüber hinaus ermöglicht der erfindungsgemäße Hydraulikdämpfer dank seines gestaffelten Aufbaus eine einfache Wartung. Darüber hinaus gewährleistet der erfindungsgemäße Hydraulikdämpfer eine zuverlässige Rückstellkraft, die Auslenkungen von Bauelementen, zwischen die der Hydraulikdämpfer gespannt ist, geringhalten kann und insbesondere Schwingungen dämpfen kann.

### Bezugszeichenliste

- 1: Ventil
- 2: Hydraulikdämpfer
- 3: Aufnahmeelement
- 4: Verschiebeelement
- 5: Federeinrichtung
- 6: Durchführung
- 7: geschlossener Zylindermantelabschnitt
- 8: Bypass
- 9: Durchlassöffnung
- 10: Fluidkanal
- 12, 121: Dämpfungskammer
- 13, 131: Dämpfungsbypass
- 14: Verschlusselement
- 16: Gegendruckkammer
- 21: erste Teilkammer
- 22: zweite Teilkammer
- 23: Kolben
- 24: Kolbenstange
- 25: Ausgleichskammer
- 26: Kanal
- 27: Trennelement
- 28: Gasdruckraum
- 29: Zuleitung
- 31: Anschlag
- 51: Federelement
- 52: Stützelement
- 53: Einstelleinrichtung
- 100: erste Seite
- 200: zweite Seite
- A: erstes Montageelement
- B: zweites Montageelement
- d1, d2, d3: Durchmesser
- x: Verschieberichtung

## Patentansprüche

1. Ventil (1) zum Gewährleisten eines Druckausgleichs zwischen Teilkammern (21, 22) eines Hydraulikdämpfers (2), wobei das Ventil (1) eine erste Seite (100) zum Verbinden mit einer ersten Teilkammer (21) und eine zweite Seite (200) zum Verbinden mit einer zweiten Teilkammer (22) aufweist, wobei das Ventil (1) in seiner Ruhelage zum Sperren eines Fluidstroms zwischen den beiden Seiten (100, 200) ausgebildet ist und bei einer Auslenkung aus seiner Ruhelage einen Durchlasskanal mit einem Durchlassquerschnitt zum Zulassen des Fluidstroms aufweist, wobei das Ventil (1) zwei Ventilelemente (3, 4) aufweist, die zueinander geführt sind und entlang einer Verschieberichtung (x) zueinander verschiebbar sind, wobei eines der beiden Ventilelemente (3, 4) als Verschiebeelement (4) und das andere Ventilelement als Aufnahmeelement (3) ausgebildet ist, wobei das Verschiebeelement (4) an seiner Belastungsseite durch ein Fluid von der ersten Seite (100) aus mit Druck beaufschlagbar ist unter Erzeugung einer effektiven Verschiebekraft auf das Verschiebeelement (4) in der Verschieberichtung (x), wobei das Verschiebeelement (4) mit einer Federeinrichtung (5) verbunden ist, die auf das Verschiebeelement (4) eine Federkraft ausübt unter Erzeugung einer Rückstellkraft, die der effektiven Verschiebekraft entgegengesetzt ist,
wobei eines der Ventilelemente (3, 4) einen Zylinderabschnitt umfasst, der mehrere Durchführungen (6) aufweist, wobei der Durchlasskanal durch zumindest einige der Durchführungen (6) verläuft und der Durchlassquerschnitt durch einen Querschnitt dieser Durchführungen (6) beschränkt ist, wobei das andere Ventilelement (3, 4) einen geschlossenen Zylindermantelabschnitt (7) aufweist, der zumindest in der Ruhelage an dem einen Ventilelement (3, 4) anliegt und den Fluidstrom sperrt, wobei durch die Auslenkung des Ventils (1), die unter Verschiebung des Verschiebeelements (4) zum Aufnahmeelement (3) in der Verschieberichtung (x) erfolgt, der Durchlassquerschnitt einstellbar ist, wobei der Durchlassquerschnitt mit der Auslenkung zunimmt,
**dadurch gekennzeichnet, dass** das Verschiebeelement (4) einen Fluidkanal(10) aufweist, der sich zumindest mit einer Komponente parallel zu der Verschieberichtung (x) erstreckt und eine fluidführende Verbindung zwischen der Belastungsseite und einer der Belastungsseite gegenüberliegenden Gegenseite des Verschiebeelements (4) gewährleistet, wobei an der Gegenseite eine Gegendruckkammer(11) vorgesehen ist, die zur Aufnahme und zur Aufstauung von durch die fluidführende Verbindung an die Gegenseite gelangtem Fluid ausgebildet ist zum Gewährleisten eines Gegendrucks auf das Verschiebeelement (4) an seiner Gegenseite, der eine Kraft auf das Verschiebeelement (4) gewährleistet, die der Verschiebekraft entgegengesetzt ist.

2. Ventil (1) nach Anspruch 1,
**dadurch gekennzeichnet, dass**
das Ventil (1) einen Bypass (8) zum ununterbrochenen Verbinden der beiden Seiten (100, 200) aufweist.

3. Ventil (1) nach einem der vorangehenden Ansprüche,
**dadurch gekennzeichnet, dass**
der Zylinderabschnitt des einen Ventilelements (3, 4), der die Durchführungen (6) aufweist, als Hohlzylinder ausgebildet ist.

4. Ventil (1) nach einem der vorangehenden Ansprüche,
**dadurch gekennzeichnet, dass**
zumindest ein Abschnitt des anderen Ventilelements (3, 4) als Hohlzylinder ausgebildet ist, der den geschlossenen Zylindermantelabschnitt (7) aufweist, wobei insbesondere axial auf den geschlossenen Zylindermantelabschnitt (7) folgend ein Zylindermantelabschnitt mit Durchlassöffnungen (9) angeordnet ist.

5. Ventil (1) nach einem der vorangehenden Ansprüche,
**dadurch gekennzeichnet, dass**
das andere Ventilelement (3, 4) zwei durch Durchlassöffnungen (9) in der Verschieberichtung (x) voneinander getrennte geschlossene Zylindermantelabschnitte (7) aufweist, wobei insbesondere das eine Ventilelement (3, 4) zwei in der Verschieberichtung (x) voneinander getrennte Bereiche aufweist, in denen jeweils Durchführungen (6) angeordnet sind.

6. Ventil (1) nach einem der vorangehenden Ansprüche,
**dadurch gekennzeichnet, dass**
die gemeinsame Querschnittsfläche der Durchführungen (6), durch die der Durchlasskanal verläuft, mit der Auslenkung des Ventils (1) aus seiner Ruhelage unter Verschiebung des Verschiebeelements (4) entlang des Verschiebewegs zunimmt.

7. Ventil (1) nach einem der vorangehenden Ansprüche,
**dadurch gekennzeichnet, dass**
zumindest einige der Durchführungen (6) mit ihren Mittelpunkten in der Verschieberichtung (x) zueinander versetzt sind.

8. Ventil (1) nach einem der vorangehenden Ansprüche,
**dadurch gekennzeichnet, dass**
die Anzahl der Durchführungen (6) in der Verschieberichtung (x) variiert, wobei insbesondere die Anzahl der Durchführungen (6) in der Verschieberichtung (x) dergestalt zunimmt, dass die Anzahl der Durchführungen (6), durch die der Durchlasskanal verläuft, zunimmt, je weiter das Ventil (1) aus seiner Ruhelage unter Verschiebung des Verschiebeelements (4) entlang des Verschiebewegs ausgelenkt ist.

9. Ventil (1) nach einem der Ansprüche 7 oder 8,
**dadurch gekennzeichnet, dass**
sich die Durchführungen (6), die in der Verschieberichtung (x) zueinander versetzt sind, in ihrer Querschnittsfläche voneinander zumindest teilweise unterscheiden, wobei insbesondere die Querschnittsfläche der Durchführungen (6) in der Verschieberichtung (x) dergestalt zunimmt, dass die Durchführungen (6), durch die der Durchlasskanal verläuft, eine um so größere Querschnittsfläche aufweisen, je weiter das Ventil (1) aus seiner Ruhelage ausgelenkt ist.

10. Ventil (1) nach einem der vorangehenden Ansprüche,
**dadurch gekennzeichnet, dass**
eine effektive Fläche des Verschiebeelements (4), über die bei einer Druckbeaufschlagung des Verschiebeelements (4) durch ein Fluid von der ersten Seite (100) aus die effektive Verschiebekraft auf das Verschiebeelement (4) ausübbar ist, geringer ist als der Querschnitt des Zylinderabschnitts, in dem die Durchführungen (6) angeordnet sind.

11. Ventil (1) nach einem der vorangehenden Ansprüche,
**dadurch gekennzeichnet, dass**
sich ein Durchmesser des Verschiebeelements (4) zumindest abschnittsweise, insbesondere stufenförmig, verändert, insbesondere entlang der Verschieberichtung (x) zur Belastungsseite hin verringert.

12. Ventil (1) nach einem der vorangehenden Ansprüche,
**dadurch gekennzeichnet, dass**
die Federeinrichtung (5) ein Federelement (51) und ein Stützelement (52) aufweist, das mit dem Aufnahmeelement (3) verbunden ist, wobei insbesondere eine Einstelleinrichtung (53) vorgesehen ist, mit der das Federelement (51) zwischen dem Stützelement (52) und dem Verschiebeelement (4) vorspannbar ist zum Einstellen der Rückstellkraft, die die Federeinrichtung (5) in Ruhelage auf das Verschiebeelement (4) ausübt.

13. Ventil (1) nach einem der vorangehenden Ansprüche,
**dadurch gekennzeichnet, dass**
das Ventil (1) eine Dämpfungseinrichtung aufweist, wobei die Dämpfungseinrichtung zumindest eine Dämpfungskammer (12, 121) umfasst, die zwischen Aufnahmeelement (3) und Verschiebeelement (4) angeordnet ist und deren Volumen von der Position des Verschiebeelements (4) entlang des Verschiebewegs abhängt, wobei die Dämpfungseinrichtung einen Dämpfungsbypass (13, 131) aufweist, über den die Dämpfungskammer (12, 121) mit der ersten und/oder zweiten Teilkammer (21, 22) verbindbar ist, wobei die Dämpfungskammer (12, 121) insbesondere ausschließlich über den Dämpfungsbypass (13, 131) mit ihrer Umgebung kommuniziert.

14. Ventil (1) nach Anspruch 13,
**dadurch gekennzeichnet, dass**
das Verschiebeelement (4) und das Aufnahmeelement (3) jeweils eine in Verschieberichtung (x) abgestufte Form aufweisen, wobei die Dämpfungskammer (12, 121) zwischen die abgestufte Form bildenden Abstufungen der beiden Ventilelemente (3, 4) ausgebildet ist.

15. Hydraulikdämpfer (2) zur Dämpfung von Schwingungen in Bauwerken, umfassend eine mit einer hydraulischen Flüssigkeit gefüllte Arbeitskammer, in der ein Kolben (23) verschiebbar angeordnet ist, der die Arbeitskammer in zwei Teilkammern (21, 22), nämliche eine erste und eine zweite Teilkammer (21, 22), unterteilt, wobei der Hydraulikdämpfer (2), insbesondere in dem Kolben (23), zumindest ein Ventil (1) zum wechselweisen Zulassen und Unterbrechen eines Fluidstroms zwischen den zwei Teilkammern (21, 22) zum Gewährleisten eines Druckausgleichs zwischen den Teilkammern (21, 22) aufweist, wobei das Ventil (1) gemäß einem der Ansprüche 1 bis 14 ausgebildet ist.

16. Hydraulikdämpfer (2) nach Anspruch 15,
**dadurch gekennzeichnet, dass**
der Hydraulikdämpfer (2) eine Kolbenstange (24) aufweist, an der der Kolben (23) angeordnet ist, wobei die Kolbenstange (24) mit ihrer axialen Erstreckung durch die Arbeitskammer verläuft und sich in jeder Position über die Arbeitskammer hinaus in eine Ausgleichskammer (25) erstreckt, die axial in Reihe hinter der Arbeitskammer angeordnet ist und über einen Kanal (26) mit der Arbeitskammer verbunden ist, wobei zumindest eine Begrenzungswand der Ausgleichskammer (25) als ein Trennelement (27) ausgebildet ist, über das die Ausgleichskammer (25) von einem Gasdruckraum (28) getrennt ist, der an der Ausgleichskammer (25) angeordnet ist, wobei das Trennelement (27) ausgebildet ist zum Gewährleisten einer Variation des Volumenverhältnisses zwischen einem Volumen der Ausgleichskammer (25) und einem Volumen des Gasdruckraums (28).

17. Hydraulikdämpfer nach Anspruch 16,
**dadurch gekennzeichnet, dass**
der Gasdruckraum (28) axial in Reihe hinter der Ausgleichskammer (25) angeordnet ist, wobei sich die Kolbenstange (24) insbesondere zumindest in einem Positionsbereich in den Gasdruckraum (28) erstreckt.

18. Hydraulikdämpfer nach einem der Ansprüche 16 bis 17,
**dadurch gekennzeichnet, dass**
die Kolbenstange (24) so in dem Hydraulikdämpfer (2) angeordnet ist, dass jede Veränderung der Position der Kolbenstange (24) eine Veränderung des Volumens der Kolbenstange (24) bewirkt, das in dem Gasdruckraum (28) oder der Ausgleichskammer (25) angeordnet ist, wobei jede Veränderung dieses Volumens der Kolbenstange (24) unmittelbar zur Veränderung des Druckverhältnisses zwischen dem Druck in der Ausgleichskammer (25) und dem Druck in dem Gasdruckraum (28) beiträgt.

## Claims

1. A valve (1) for ensuring pressure compensation between sub-chambers (21, 22) of a hydraulic damper (2), the valve (1) having a first side (100) for connection to a first sub-chamber (21) and a second side (200) for connection to a second sub-chamber (22), the valve (1) being adapted in its rest position to block a fluid flow between the two sides (100, 200) and having a passage channel with a passage cross-section for allowing the fluid flow when deflected from its rest position, the valve (1) having two valve elements (3, 4) which are guided relative to one another and are displaceable relative to one another along a displacement direction (x), one of the two valve elements (3, 4) being designed as a displacement element (4) and the other valve element being designed as a receiving element (3), wherein the displacement element (4) is pressurizable on its loading side by a fluid from the first side (100) while generating an effective displacement force on the sliding element (4) in the displacement direction (x), wherein the displacement element (4) is connected to a spring device (5) which exerts a spring force on the displacement element (4) while generating a restoring force which is opposite the effective displacement force, one of the valve elements (3, 4) comprising a cylinder portion having a plurality of feedthroughs (6), the passage channel passing through at least some of the feedthroughs (6) and the passage cross-section being restricted by a cross-section of these feedthroughs (6), the other valve element (3, 4) having a closed cylinder shell portion (7), which lies against the one valve element (3, 4) at least in the rest position and blocks the fluid flow, the passage cross-section being adjustable by the deflection of the valve (1), which occurs with displacement of the displacement element (4) relative to the receiving element (3) in the displacement direction (x), the passage cross-section increasing with the displacement,
**characterized in that** the displacement element (4) has a fluid channel (10) extending parallel to the displacement direction (x) with at least one component and providing a fluid-carrying connection between the loading side and an opposite side of the displacement element (4) opposite the loading side, wherein a counter-pressure chamber (11) is provided on the opposite side, which is designed to receive and accumulate fluid which has passed through the fluid-carrying connection to the opposite side to ensure a counter pressure on the displacement element (4) on its opposite side, which ensures a force on the displacement element (4) which is opposite to the displacement force.

2. Valve (1) according to claim 1, **characterized in that** the valve (1) includes a bypass (8) for an uninterrupted connection of both sides (100, 200).

3. Valve (1) according to any one of the preceding claims, **characterized in that** the cylinder portion of said one valve element (3, 4) having the feedthroughs (6) is designed as a hollow cylinder.

4. Valve (1) according to any one of the preceding claims, **characterized in that** at least one portion of the other valve element (3, 4) is formed as a hollow cylinder having the closed cylinder shell portion (7), a cylinder shell portion with passage openings (9) being arranged following the closed cylinder shell portion (7) in particular axially.

5. Valve (1) according to any one of the preceding claims, **characterized in that** the other valve element (3, 4) has two closed cylinder shell portions (7) separated from one another by passage openings (9) in the direction of displacement (x), in particular one valve element (3, 4) having two regions separated from one another in the direction of displacement (x), in each of which feedthroughs (6) are arranged.

6. Valve (1) according to any one of the preceding claims, **characterized in that** the common cross-sectional area of the feedthroughs (6) through which the passage channel passes increases with the deflection of the valve (1) from its rest position with displacement of the displacement element (4) along the displacement path.

7. Valve (1) according to any one of the preceding claims, **characterized in that** at least some of the feedthroughs (6) are offset with their centers in the direction of displacement (x) relative to one another.

8. Valve (1) according to any one of the preceding claims, **characterized in that** the number of feedthroughs (6) varies in the displacement direction (x), in particular the number of feedthroughs (6) in the displacement direction (x) increasing in such a way that the number of feedthroughs (6) through which the passage channel passes increases the further the valve (1) is deflected from its rest position while displacing the displacement element (4) along the displacement path.

9. Valve (1) according to any one of the claims 7 or 8, **characterized in that** the cross-sectional area of the feedthroughs (6), which are offset from one another in the displacement direction (x), at least partially differs from one another, in particular the cross-sectional area of the feedthroughs (6) increasing in the displacement direction (x) in such a way that the feedthroughs (6) through which the passage channel passes have a larger cross-sectional area the further the valve (1) is deflected from its rest position.

10. Valve (1) according to any one of the preceding claims, **characterized in that** an effective area of the displacement element (4), via which the effective displacement force can be exerted on the displacement element (4) from the first side (100) when the displacement element (4) is pressurized by a fluid, is smaller than the cross-section of the cylinder section in which the feedthroughs (6) are arranged.

11. Valve (1) according to any one of the preceding claims, **characterized in that** a diameter of the displacement element (4) changes at least in sections, in particular in steps, in particular along the displacement direction (x) towards the load side.

12. Valve (1) according to any one of the preceding claims, **characterized in that** the spring device (5) has a spring element (51) and a support element (52) which is connected to the receiving element (3), in particular an adjusting device (53) being provided with which the spring element (51) is prestressable between the support element (52) and the displacement element (4) for adjusting the restoring force which the spring device (5) exerts on the displacement element (4) in the rest position.

13. Valve (1) according to any one of the preceding claims, **characterized in that** the valve (1) has a damping device, the damping device comprising at least one damping chamber (12, 121) which is arranged between the receiving element (3) and the displacement element (4) and whose volume depends on the position of the displacement element (4) along the displacement path, the damping device having a damping bypass (13, 131) via which the damping chamber (12, 121) can be connected to the first and/or second sub-chamber (21, 22), the damping chamber (12, 121) communicating with its surroundings in particular exclusively via the damping bypass (13, 131).

14. Valve (1) according to claim 13, **characterized in that** the displacement element (4) and the receiving element (3) each have a shape stepped in the direction of displacement (x), the damping chamber (12, 121) being formed between the gradations of the two valve elements (3, 4) forming the stepped shape.

15. Hydraulic damper (2) for damping vibrations in structures, comprising a working chamber filled with a hydraulic fluid, in which a piston (23) is displaceably arranged, which divides the working chamber into two sub-chambers (21, 22), namely a first and a second sub-chamber (21, 22), the hydraulic damper (2), in particular in the piston (23), comprising at least one valve (1) for alternately permitting and interrupting a fluid flow between the two sub-chambers (21, 22) to ensure pressure compensation between the sub-chambers (21, 22), the valve (1) being designed in accordance with one of claims 1 to 14.

16. Hydraulic damper (2) according to claim 15, **characterized in that** the hydraulic damper (2) has a piston rod (24) on which the piston (23) is arranged, the piston rod (24) extending axially through the working chamber and extending in each position beyond the working chamber into a compensating chamber (25) which is arranged axially in series behind the working chamber and is connected to the working chamber via a channel (26), wherein at least one boundary wall of the compensating chamber (25) is formed as a separating element (27) via which the compensating chamber (25) is separated from a gas pressure chamber (28) disposed on the compensating chamber (25), the separating element (27) being formed to ensure a variation in the volume ratio between a volume of the compensating chamber (25) and a volume of the gas pressure chamber (28).

17. Hydraulic damper according to claim 16, **characterized in that** the gas pressure chamber (28) is arranged axially in series behind the compensation chamber (25), the piston rod (24) extending into the gas pressure chamber (28), in particular in at least one position region.

18. Hydraulic chamber according to any one of the claims 16 to 17, **characterized in that** the piston rod (24) is arranged in the hydraulic damper (2) such that any change in the position of the piston rod (24) causes a change in the volume of the piston rod (24) arranged in the gas pressure chamber (28) or the compensation chamber (25), each change in this volume of the piston rod (24) directly contributing to the change in the pressure ratio between the pressure in the compensation chamber (25) and the pressure in the gas pressure chamber (28).

## Revendications

1. Soupape (1) pour assurer une compensation de pression entre des sous-chambres (21, 22) d'un amortisseur hydraulique (2), la soupape (1) ayant un premier côté (100) pour la connexion à une première sous-chambre (21) et un second côté (200) pour la connexion à une seconde sous-chambre (22), la soupape (1) étant adaptée dans sa position de repos pour bloquer un écoulement de fluide entre les deux côtés (100, 200) et ayant un canal de passage avec une section de passage pour permettre l'écoulement de fluide lorsqu'il est dévié de sa position de repos, la soupape (1) comportant deux éléments de soupape (3, 4) qui sont guidés l'un par rapport à l'autre et sont déplaçables l'un par rapport à l'autre le long d'une direction de déplacement (x), l'un des deux éléments de soupape (3, 4) étant conçu comme élément de déplacement (4) et l'autre élément de soupape étant conçu comme élément de réception (3), dans laquelle l'élément coulissant (4) est pressurisable sur son côté de chargement par un fluide à partir du premier côté (100) tout en générant une force de déplacement efficace sur l'élément coulissant (4) dans la direction de déplacement (x), dans laquelle l'élément coulissant (4) est relié à un dispositif à ressort (5) qui exerce une force de ressort sur l'élément coulissant (4) tout en générant une force de rappel qui est opposée à la force de déplacement efficace, l'un des éléments de soupape (3, 4) comprenant une partie de cylindre ayant une pluralité de traversées (6), le canal de passage traversant au moins certaines des traversées (6) et la section transversale de passage étant limitée par une section transversale de ces traversées (6), l'autre élément de soupape (3, 4) ayant une partie d'enveloppe de cylindre fermée (7), qui se trouve au moins en position de repos contre l'un des éléments de soupape (3, 4) et bloque l'écoulement du fluide, la section de passage étant réglable par la déviation de la soupape (1), qui se produit lors du déplacement de l'élément de déplacement (4) par rapport à l'élément de réception (3) dans la direction de déplacement (x), la section de passage augmentant avec le déplacement,
**caractérisée en ce que** l'élément de déplacement (4) a un canal de fluide (10) s'étendant parallèlement à la direction de déplacement (x) avec au moins un composant et fournissant une connexion de transport de fluide entre le côté de chargement et un côté de l'élément de déplacement (4) opposé au côté de chargement, dans laquelle une chambre de contre-pression (11) est prévue sur le côté opposé, qui est conçue pour recevoir et accumuler le fluide qui est passé à travers la connexion de transport de fluide vers le côté opposé pour assurer une contre-pression sur l'élément coulissant (4) sur son côté opposé, qui assure une force sur l'élément coulissant (4) qui est opposée à la force de déplacement.

2. Soupape (1) selon la revendication 1, **caractérisée en ce que** la soupape (1) comporte un by-pass (8) pour la connexion des deux côtés (100, 200) sans interruption.

3. Soupape (1) selon l'une quelconque des revendications précédentes,
**caractérisée en ce que** la partie de cylindre de l'un des éléments de soupape (3, 4) qui présente les traversées (6) est conçu comme cylindre creux.

4. Soupape (1) selon l'une quelconque des revendications précédentes,
**caractérisée en ce qu'**au moins une partie de l'autre élément de soupape (3, 4) est conçu comme cylindre creux qui présente la partie d'enveloppe de cylindre fermée (7), une partie d'enveloppe de cylindre avec des ouvertures de passage (9) étant disposé à la suite de la partie d'enveloppe de cylindre fermée, en particulier dans le sens axial.

5. Soupape (1) selon l'une quelconque des revendications précédentes,
**caractérisée en ce que** l'autre élément de soupape (3, 4) présente deux parties d'enveloppe de cylindre fermées (7) séparées l'une de l'autre par des ouvertures de passage (9) dans la direction de déplacement (x), en particulier un élément de soupape (3, 4) ayant deux régions séparées l'une de l'autre dans la direction de déplacement (x), dans chacune desquelles sont disposés des traversées (6).

6. Soupape (1) selon l'une quelconque des revendications précédentes,
**caractérisée en ce que** la section transversale commune des traversées (6) à travers lesquelles passe le canal de passage augmente avec la déviation de la soupape (1) de sa position de repos avec le déplacement de l'élément de déplacement (4) le long de la trajectoire de déplacement.

7. Soupape (1) selon l'une quelconque des revendications précédentes,
**caractérisée en ce qu'**au moins certaines des traversées (6) sont décalées avec leurs centres dans la direction de déplacement (x) l'un par rapport à l'autre.

8. Soupape (1) selon l'une quelconque des revendications précédentes,
**caractérisée en ce que** le nombre de traversées (6) varie dans la direction de déplacement (x), en particulier le nombre de traversées (6) dans la direction de déplacement (x) augmentant de telle sorte que le nombre de traversées (6) à travers lesquelles passe le canal de passage augmente à mesure que la soupape (1) s'éloigne de sa position de repos tout en déplaçant l'élément de déplacement (4) le long de la trajectoire de déplacement.

9. Soupape (1) selon l'une quelconque des revendications 7 ou 8, **caractérisée en ce que** la surface de la section transversale des traversées (6), qui sont décalées les unes par rapport aux autres dans la direction de déplacement (x), diffère au moins partiellement les unes des autres, en particulier la surface de la section transversale des traversées (6) augmentant dans la direction de déplacement (x) de telle sorte que les traversées (6) à travers lesquelles passe le canal de passage ont une plus grande surface de la section transversale, plus la soupape (1) est déviée de sa position de repos.

10. Soupape (1) selon l'une quelconque des revendications précédentes,
**caractérisée en ce qu'**une surface effective de l'élément de déplacement (4), par l'intermédiaire de laquelle la force de déplacement effective peut être exercée sur l'élément de déplacement (4) à partir du premier côté (100) lorsque l'élément de déplacement (4) est pressurisé par un fluide, est plus petite que la section transversale de la partie du cylindre dans laquelle les traversées sont (6) disposées.

11. Soupape (1) selon l'une quelconque des revendications précédentes,
**caractérisée en ce qu'**un diamètre de l'élément de déplacement (4) change au moins par sections, en particulier par étapes, en particulier le long de la direction de déplacement (x) vers le côté de la charge.

12. Soupape (1) selon l'une quelconque des revendications précédentes,
**caractérisée en ce que** le dispositif à ressort (5) comporte un élément élastique (51) et un élément de support (52) qui est relié à l'élément de réception (3), en particulier un dispositif de réglage (53) avec lequel l'élément élastique (51) peut être précontraint entre l'élément de support (52) et l'élément coulissant (4).

13. Soupape (1) selon l'une quelconque des revendications précédentes,
**caractérisée en ce que** la soupape comporte un dispositif d'amortissement, le dispositif d'amortissement comprenant au moins une chambre d'amortissement (12, 121) qui est disposée entre l'élément de réception (3) et l'élément de déplacement (4) et dont le volume dépend de la position de l'élément de déplacement (4) le long de la trajectoire de déplacement, le dispositif d'amortissement comportant un by-pass d'amortissement (13, 131) par l'intermédiaire duquel la chambre d'amortissement (12, 121) peut être reliée à la première et/ou à la deuxième sous-chambre (21, 22), la chambre d'amortissement (12, 121) communiquant avec son environnement en particulier exclusivement par le by-pass d'amortissement (13, 131).

14. Soupape (1) selon l'une quelconque des revendications précédentes,
**caractérisée en ce que** l'élément de déplacement (4) et l'élément de réception (3) ont chacun une forme étagée dans la direction de déplacement (x), la chambre d'amortissement (12, 121) étant formée entre les gradations des deux éléments de soupape (3, 4) formant la forme étagée.

15. Amortisseur hydraulique (2) pour amortir les vibrations dans des structures, comprenant une chambre de travail remplie d'un fluide hydraulique, dans laquelle est disposé de manière déplaçable un piston (23) qui divise la chambre de travail en deux sous-chambres (21, 22), à savoir une première et une deuxième sous-chambre (21, 22), l'amortisseur hydraulique (2), en particulier dans le piston (23), comprenant au moins une soupape (1) pour permettre et interrompre alternativement un écoulement de fluide entre les deux sous-chambres (21, 22) pour assurer une compensation de pression entre les sous-chambres (21, 22), la soupape (1) étant conçue selon l'une des revendications 1 à 14.

16. Amortisseur hydraulique (2) selon la revendication 15, **caractérisé en ce que** l'amortisseur hydraulique (2) présente une tige de piston (24) sur laquelle est disposé le piston (23), la tige de piston (24) s'étendant axialement à travers la chambre de travail et s'étendant dans chaque position au-delà de la chambre de travail dans une chambre de compensation (25) qui est disposée axialement en série derrière la chambre de travail et est reliée à la chambre de travail par un canal (26), dans laquelle au moins une paroi limite de la chambre de compensation (25) est formée en tant qu'élément de séparation (27) par lequel la chambre de compensation (25) est séparée d'une chambre de pression de gaz (28) disposée sur la chambre de compensation (25), l'élément de séparation (27) étant formé pour assurer une variation du rapport volumique entre un volume de la chambre de compensation (25) et un volume de la chambre de pression de gaz (28).

17. Amortisseur hydraulique selon la revendication 16, **caractérisé en ce que** la chambre de pression de gaz (28) est disposée axialement en série derrière la chambre de compensation (25), la tige de piston (24) s'étendant dans la chambre de pression de gaz (28), en particulier dans au moins une zone de position.

18. Amortisseur hydraulique selon l'une quelconque des revendications 16 à 17, **caractérisé en ce que** la tige de piston (24) est disposée dans l'amortisseur hydraulique (2) de telle sorte que toute modification de la position de la tige de piston (24) provoque une modification du volume de la tige de piston (24) disposée dans la chambre de pression de gaz (28) ou la chambre de compensation (25), chaque modification de ce volume de la tige de piston (24) contribuant directement à la modification du rapport de pression entre la pression dans la chambre de compensation (25) et la pression dans la chambre de pression de gaz (28).
